# EUROPEAN PATENT APPLICATION

(11) **EP 2 660 653 A1**
(43) Date of publication of application: **06.11.2013**
(21) Application number: 11853276.1
(22) Date of filing: 02.12.2011
(51) Int. Cl.: G03B 11/04, G03B 35/10, H04N 5/225, H04N 13/02

(54) **LENS PROTECTION DEVICE, LENS UNIT, AND IMAGE CAPTURE DEVICE**

(30) Priority: 28.12.2010 JP 2010293949
(71) Applicant: Sony Corporation, Tokyo 108-0075 (JP)
(72) Inventor: UWAGAWA, Satoshi, Tokyo 108-0075 (JP)
(74) Representative: Robinson, Nigel Alexander Julian
(86) International application number: PCT/JP2011/078498
(87) International publication number: WO 2012/090675

(57) **Abstract**

Provided is a lens protection device including one lens protection cover configured to be disposed in front of two surfaces of two image capture lenses that have the two surfaces directed in a same direction and arranged in a transverse row and to be movable between a covering position for covering the two surfaces from an outside and a retreat position for exposing the two surfaces to the outside.

## Description

### Technical Field

The present invention relates to a lens protection device, a lens unit and an image capture device, for example, which are appropriately applied to a twin lens type video camera that can simultaneously capture images of the same subject using two image capture units, each constituted by a lens barrel and an image sensor, and generate an image for a left eye and an image for a right eye having different viewpoints for a stereoscopic view.

### Background Art

A three-dimensional picture photographing apparatus of the related art is configured such that two image capture units, each constituted by a lens barrel and an image sensor, expose surfaces of the image capture lenses accommodated in the lens barrels to the outside and substantially dispose optical axes of the image capture lenses in parallel a pupil distance from each other.

Accordingly, in the three-dimensional picture photographing apparatus, as images of the same subject are simultaneously captured by the two image capture units, an image for a left eye and an image for a right eye having different viewpoints for a stereoscopic view are generated (for example, see Patent Literature 1).

### Citation List

### Patent Literature

Patent Literature 1: Japanese Patent Application Laid-open No. H09-215012 (Page 3, Figs. 1 and 3)

### Summary of Invention

### Technical Problem

However, in the three-dimensional picture photographing apparatus having the above-mentioned configuration, if surfaces of the two image capture lenses are exposed even when an image of a subject is not captured, the one surface of the image capture lens may come in contact with a hand or the like and be damaged or contaminated.

However, in a single lens type video camera widely popularized in recent times, an openable lens protection cover, known as a barrier, is formed at an opening configured to expose one surface of one image capture lens installed at the video camera.

For this reason, even in the three-dimensional picture photographing apparatus, like the single lens type video camera, lens protection covers are installed to open and close the openings configured to expose the surfaces of the two image capture lenses.

Then, in the three-dimensional picture photographing apparatus, in the case in which an image of a subject is not captured, when the corresponding openings are closed to cover the surfaces of the image capture lenses from the outside by the two lens protection covers, the surfaces of the image capture lenses can be protected from damage or contamination.

However, in the three-dimensional picture photographing apparatus, in order to protect the image capture lenses, the lens protection covers should be installed at the image capture lenses, which noticeably complicate a configuration of the three-dimensional picture photographing apparatus.

In consideration of the above-mentioned problems, it is an object of the present invention to provide a lens protection device capable of easily protecting two image capture lenses through a simple configuration, a lens unit and an image capture device.

### Solution to Problem

According to the first aspect of the present invention in order to achieve the above-mentioned object, there is provided one lens protection cover disposed in front of two surfaces of two image capture lenses directed in the same direction and disposed transversely and in parallel in a row, and movable between a covering position for covering the two surfaces from the outside and a retreat position for exposing the two surfaces to the outside.

Accordingly, in the present invention, when the image of the subject is captured, one lens protection cover can be moved to the retreat position to expose the two surfaces of the two image capture lenses, and when the image of the subject is not captured, one lens protection cover can be moved to the covering position to simultaneously cover the two surfaces of the two image capture lenses from the outside.

### Advantageous Effects of Invention

According to the present invention, as one lens protection cover disposed in front of two surfaces of two image capture lenses directed in the same direction and disposed transversely and in parallel in a row and movable between a covering position for covering the two surfaces from the outside and a retreat position for exposing the two surfaces to the outside is provided, when the image of the subject is captured, one lens protection cover can be moved to the retreat position to expose the two surfaces of the two image capture lenses, and when the image of the subject is not captured, one lens protection cover can be moved to the covering position to simultaneously cover the two surfaces of the two image capture lenses from the outside. Accordingly, a lens protection device capable of easily protecting two image capture lenses through a simple configuration, a lens unit and an image capture device, can be realized.

### Brief Description of Drawings

[Fig. 1] Fig. 1 is a schematic perspective view showing an embodiment of an external configuration of a twin lens type video camera according to the present invention;
[Fig. 2] Fig. 2 is a schematic perspective view showing the embodiment of the external configuration of the twin lens type video camera according to the present invention;
[Fig. 3] Fig. 3 is a schematic perspective view showing a configuration of a lens unit;
[Fig. 4] Fig. 4 is an exploded perspective view showing a configuration of a lens protection unit;
[Fig. 5] Fig. 5 is a schematic front view showing the configuration of the lens protection unit;
[Fig. 6] Fig. 6 is a schematic cross-sectional view for describing a disposition of a lens protection cover in the lens protection unit;
[Fig. 7] Fig. 7 is a schematic cross-sectional view for describing the disposition of the lens protection cover in the lens protection unit;
[Fig. 8] Fig. 8 is a schematic front view for describing movement of the lens protection cover to a retreat position;
[Fig. 9] Fig. 9 is a schematic front view for describing movement of the lens protection cover to a covering position;
[Fig. 10] Fig. 10 is a schematic perspective view showing configurations of a lower end section of an upper cover main body and an upper end section of a lower cover main body;
[Fig. 11] Fig. 11 is a schematic perspective view for describing covering of an image capture lens for a left eye and an image capture lens for a right eye by the lens protection cover;
[Fig. 12] Fig. 12 is a block diagram showing a circuit configuration of a video camera;
[Fig. 13] Fig. 13 is a schematic front view showing a variant of a configuration of the lens protection unit; and
[Fig. 14] Fig. 14 is a schematic perspective view showing a variant of a configuration of the lens protection cover.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

A best mode (hereinafter referred to as an embodiment) for carrying out the invention will be described with reference to the accompanying drawings. In addition, description will be made as follows.
1. Embodiment
2. Variant

### <1. Embodiment>

### [1-1. External configuration of video camera]

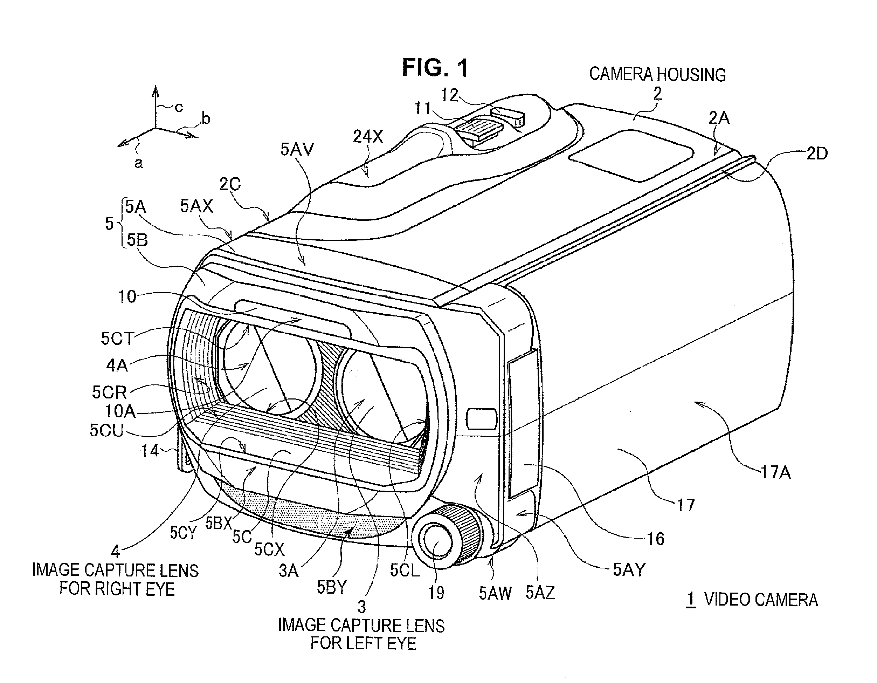

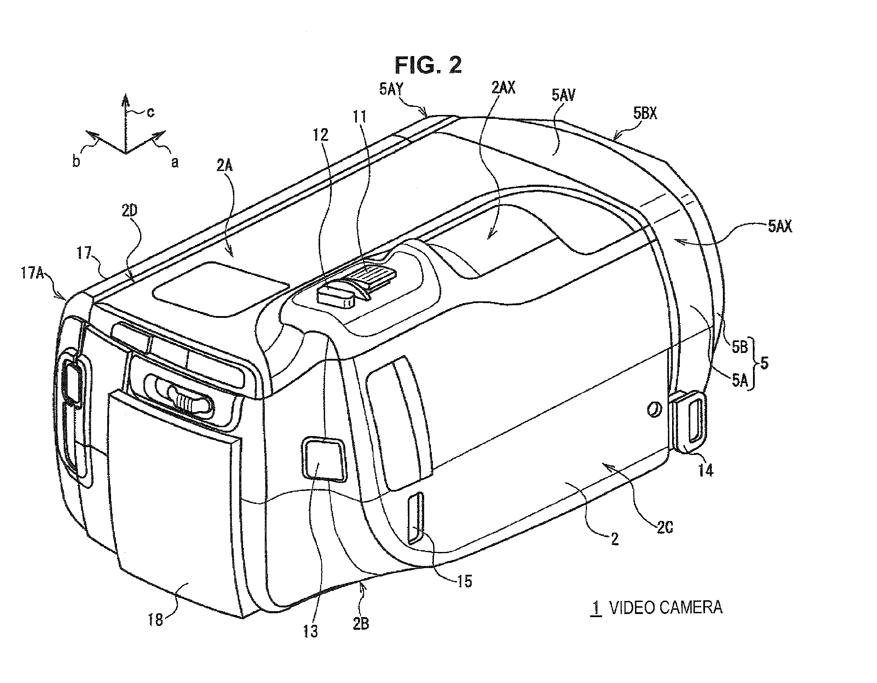

In Figs. 1 and 2, reference numeral 1 generally designates a twin lens type video camera to which the present invention is applied. The video camera 1 has a camera housing 2 having a substantially rectangular parallelepiped shape.

In addition, in the following description, a direction represented by an arrow a along a long side of the camera housing 2 having the substantially rectangular parallelepiped shape is referred to as a forward direction. Further, in the following description, when the forward direction along the long side of the camera housing 2 and a rearward direction opposite to the forward direction do not need to be particularly distinguished, both of the forward direction and rearward direction are referred to as a housing longitudinal direction. Further, in the following description, an end section in the forward direction of the camera housing 2 is referred to as a housing front end section, and an end section in the rearward direction is referred to as a housing rear end section.

In addition, in the following description, a direction represented by an arrow b along a width of the camera housing 2 having the rectangular parallelepiped shape is referred to as a rightward direction. Further, in the following description, when the rightward direction along the width of the camera housing 2 and a leftward direction opposite to the rightward direction do not need to be particularly distinguished, both of the rightward direction and the leftward direction are referred to as a housing widthwise direction. Further, in the following description, an end section in the leftward direction of the camera housing 2 is referred to as a housing left end section, and an end section in the rightward direction is referred to as a housing right end section.

Furthermore, in the following description, a direction represented by an arrow c along a height of the camera housing 2 having the substantially rectangular parallelepiped shape is referred to as an upward direction. In addition, in the following description, when the upward direction along the height of the camera housing 2 and a downward direction opposite to the upward direction do not need to be particularly distinguished, both of the upward direction and the downward direction are referred to as a housing height direction. Further, in the following description, an end section in the upward direction of the camera housing 2 is referred to as a housing upper end section, and an end section in the downward direction is referred to as a housing lower end section.

Two image capture units constituted by lens barrels and in which a plurality of optical devices including image capture lenses 3 and 4 are sequentially disposed therein, and image sensors configured to capture images at different viewpoints as when a user looks at a subject with left and right eyes are accommodated in the camera housing 2.

That is, one image capture unit is configured to capture an image as when a user looks at a subject with a left eye. In addition, the other image capture unit is configured to capture an image as when a user looks at a subject with a right eye.

Accordingly, in the following description, in the two image capture units, the one image capture unit configured to capture an image as when a user looks at a subject with a left eye is referred to as an image capture unit for a left eye.

Further, in the following description, the lens barrel provided in the image capture unit for a left eye is referred to as a lens barrel for a left eye, and the image sensor provided in the image capture unit for a left eye is referred to as an image sensor for a left eye.

In addition, in the following description, in the two image capture units, the other image capture unit configured to capture an image as when a user looks at a subject with a right eye is referred to as an image capture unit for a right eye.

Further, in the following description, the lens barrel provided in the image capture unit for a right eye is referred to as a lens barrel for a right eye, and the image sensor provided in the image capture unit for a right eye is referred to as an image sensor for a right eye.

In addition, the image sensor for a left eye and the image sensor for a right eye are charge coupled device (CCD) image sensors, complementary metal oxide semiconductor (CMOS) image sensors, or the like.

Here, the image capture lens 3 in the lens barrel for a left eye is disposed in front of the lens barrel for a left eye such that imaging light coming from the outside upon imaging of the subject initially enters one surface 3A formed in a convex shape of the image capture lens 3.

Further, the image capture lens 4 in the lens barrel for a right eye is also disposed in front of the lens barrel for a right eye such that imaging light coming from the outside upon imaging of the subject initially enters one surface 4A formed in a convex shape of the image capture lens 4.

Here, in the following description, the image capture lens 3 disposed in front of the lens barrel for a left eye is referred to as an image capture lens for a left eye 3. In addition, in the following description, the image capture lens 4 disposed in front of the lens barrel for a right eye is referred to as an image capture lens for a right eye 4.

Further, in the following description, the surfaces 3A and 4A of the image capture lens for a left eye 3 and the image capture lens for a right eye 4 in which the imaging light coming from the outside upon imaging of the subject are referred to as incident planes 3A and 4A, respectively.

The lens barrel for a left eye and the lens barrel for a right eye are disposed in parallel to the housing widthwise direction to direct the incident planes 3A and 4A of the image capture lens for a left eye 3 and the image capture lens for a right eye 4 in the same forward direction such that the optical axes cross each other at a predetermined position in front of the video camera 1.

Accordingly, the image capture lens for a left eye 3 and the image capture lens for a right eye 4 are disposed in parallel to a transverse row (i.e., in this case, in a row in the housing widthwise direction) according to a positional relation of the disposition of the lens barrel for a left eye and the lens barrel for a right eye as when a user looks at a subject with left and right eyes in parallel.

That is, the image capture lens for a left eye 3 and the image capture lens for a right eye 4 are disposed in parallel in a transverse row such that the incident planes 3A and 4A are directed in the forward direction and the edge sections of the incident planes 3A and 4A are spaced a predetermined distance from and oppose each other.

Then, in the image capture unit for a left eye in the camera housing 2, the image sensor for a left eye is disposed at a rear side of the lens barrel for a left eye disposed near the housing left end section (i.e., closer to the housing rear end section than the lens barrel for a left eye).

In addition, in the image capture unit for a right eye in the camera housing 2, the image sensor for a right eye is disposed at a rear side of the lens barrel for a right eye disposed near the housing right end section (i.e., closer to the housing rear end section than the lens barrel for a right eye).

A lens hood 5 having a convex hood section 5B protrudes from the housing front end section of the camera housing 2 near a right side of a tip section of a substantially rectangular rim-shaped body section 5A.

Then, the front end section sides of the lens barrel for a left eye and lens barrel for a right eye are accommodated in the body section 5A of the lens hood 5 near the housing rear end section. That is, the image capture lens for a left eye 3 and the image capture lens for a right eye 4 are disposed in the body section 5A of the lens hood 5.

In this case, in the lens hood 5, a height of the body section 5A (i.e., a length in the housing height direction in the body section 5A) is set to be substantially equal to a height of the camera housing 2.

In addition, in the lens hood 5, a width of the body section 5A (i.e., a length in the housing widthwise direction in the body section 5A) is set to be slightly larger than a width of the camera housing 2.

Then, in the lens hood 5, an upper surface 5AV, a lower surface 5AW and a right side surface 5AX of the body section 5A are disposed like extension portions of an upper surface 2A, a lower surface 2B and a right side surface 2C of the camera housing 2, and a left side surface 5AY of the body section 5A protrudes leftward more than a left side surface 2D of the camera housing 2.

Further, the entire length of the lens hood 5 is set to about several cm, for example, 2 to 3 cm. Here, the entire length of the lens hood 5 is a length in the housing longitudinal direction of the lens hood 5, and the length is hereinafter referred to as a hood length.

Then, a quadrangular pyramid-shaped concave section 5C having a predetermined depth smaller than the hood length has a bottom opposite to the incident planes 3A and 4A of the image capture lens for a left eye 3 and the image capture lens for a right eye 4 parallel to a transverse row is formed at a central section of a tip surface 5BX of the hood section 5B.

Here, in the following description, the tip surface 5BX of the hood section 5B is also referred to as a hood tip surface 5BX. In addition, in the following description, the concave section 5C formed in the hood tip surface 5BX is also referred to as a concave section for a hood 5C.

Further, the concave section for a hood 5C of the lens hood 5 has an opening 5CX formed by drilling the entire bottom surface of the concave section for a hood 5C.

Here, in the concave section for a hood 5C of the lens hood 5, the opening 5CY of the hood tip surface 5BX and the opening 5CX of the bottom are formed in a substantially rectangular shape having a long side, which are parallel to the housing widthwise direction.

In addition, in the following description, the opening 5CY of the hood tip surface 5BX in the concave section for a hood 5C of the lens hood 5 is referred to as a tip opening SCY, and the opening 5CX of the bottom is referred to as a bottom opening 5CX.

Further, the bottom opening 5CX of the concave section for a hood 5C is set to have a size smaller than that of the tip opening SCY However, in the bottom opening 5CX of the concave section for a hood 5C, a length in the housing widthwise direction is set to a predetermined length larger than two times a diameter of the image capture lens for a left eye 3 and the image capture lens for a right eye 4.

In addition, in the bottom opening SCX of the concave section for a hood 5C, a length in the housing height direction is set to a predetermined length substantially equal to the diameter of the image capture lens for a left eye 3 and the image capture lens for a right eye 4.

Accordingly, the lens hood 5 can sequentially expose the incident planes 3A and 4A of the image capture lens for a left eye 3 and the image capture lens for a right eye 4 to the outside sequentially via the bottom opening 5CX and the tip opening 5CY of the concave section for a hood 5C.

Therefore, the video camera 1 can introduce the imaging light coming from the imaging range including the subject into the incident planes 3A and 4A of the image capture lens for a left eye 3 and the image capture lens for a right eye 4 while the hood tip surface SBX is directed toward the subject and the video filming is instructed.

Then, when the imaging light enters the image capture lens for a left eye 3 and the image capture lens for a right eye 4, the video camera 1 receives the imaging light introduced into the image capture lens for a left eye 3 of the image capture unit for a left eye at a light receiving surface of the image sensor for a left eye via another optical device in the lens barrel.

In addition, when the imaging light enters the image capture lens for a left eye 3 and the image capture lens for a right eye 4, the video camera 1 receives the imaging light introduced into the image capture lens for a right eye 4 of the image capture unit for a right eye at the light receiving surface of the image sensor for a right eye via another optical device in the lens barrel.

Accordingly, the video camera 1 photoelectrically converts the imaging light received at the light receiving surface by the image sensor for a left eye to generate image data for a left eye for a moving image, and photoelectrically converts the imaging light received at the light receiving surface by the image sensor for a right eye to generate image data for a right eye for a moving image.

Then, the video camera 1 records the image data for a left eye and image data for a right eye for a moving image generated by the image capture unit for a left eye and the image capture unit for a right eye on a predetermined recording medium such as a disk-shaped recording medium, a semiconductor memory, or the like, accommodated in the camera housing 2.

As a result, upon the video filming, the video camera 1 can simultaneously capture images of the subject by the image capture unit for a left eye and the image capture unit for a right eye, and obtain the image data for a left eye and the image data for a right eye of the image for a left eye and the image for a right eye having different viewpoints for a stereoscopic view of the moving image.

In addition, even when the hood tip surface 5BX is directed toward the subject and the picture photographing is instructed, the video camera 1 can introduce the imaging light coming from the imaging range including the subject into the incident planes 3A and 4A of the image capture lens for a left eye 3 and the image capture lens for a right eye 4.

Then, even at this time, similar to the above-mentioned video filming, the video camera 1 receives the imaging light introduced into the image capture lens for a left eye 3 of the image capture unit for a left eye by the image sensor for a left eye, and also receives the imaging light introduced into the image capture lens for a right eye 4 of the image capture unit for a right eye by the image sensor for a right eye.

Further, the video camera 1 photoelectrically converts the imaging light received at the light receiving surface by the image sensor for a left eye to generate image data for a left eye for a photographic image, and photoelectrically converts the imaging light received at the light receiving surface by the image sensor for a right eye to generate image data for a right eye for a photographic image.

Then, the video camera 1 records the image data for a left eye and image data for a right eye for a photographic image generated by the image capture unit for a left eye and the image capture unit for a right eye on the recording medium in the camera housing 2.

As a result, upon the picture photographing, the video camera 1 can capture images of the same subject by the image capture unit for a left eye and the image capture unit for a right eye, and obtain the image data for a left eye and the image data for a right eye of the image for a left eye and the image for a right eye having different viewpoints for a stereoscopic view of the photographic image.

Here, in the concave section for a hood 5C of the lens hood 5, an upper inner surface 5CT and a lower inner surface 5CU are inclined such that an inner space is gradually increased in upward and downward directions from the bottom opening 5CX to the tip opening SCY.

In addition, in the concave section for a hood 5C of the lens hood 5, a left inner surface 5CL and a right inner surface 5CR are inclined such that an inner space is also gradually increased in leftward and rightward directions from the bottom opening 5CX to the tip opening SCY.

Further, in the concave section for a hood 5C of the lens hood 5, a plurality of stepped sections are formed at the upper inner surface 5CT and the lower inner surface 5CU, and the left inner surface 5CL and the right inner surface 5CR at a predetermined pitch, which is relatively small.

Then, the lens hood 5 is disposed at a front side at which the tip opening 5CY of the concave section for a hood 5C is relatively far from the incident planes 3A and 4A of the image capture lens for a left eye 3 and the image capture lens for a right eye 4.

Accordingly, upon the video filming or the picture photographing of the subject, the lens hood 5 can introduce the imaging light coming from the imaging range including the subject into the concave section for a hood 5C to enter the incident planes 3A and 4A of the image capture lens for a left eye 3 and the image capture lens for a right eye 4.

In addition, here, in the lens hood 5, even when a light source disposed at surroundings such as just thereabove, on a forward inclination, a side of the forward inclination, or the like, emits light having a relatively high brightness, the light can be blocked by the outer surface of the hood section 5B to reduce the light entering the concave section for a hood 5C.

Further, here, in the lens hood 5, even when the light having the high brightness enters the concave section for a hood 5C, the light radiated to the upper inner surface 5CT, the lower inner surface 5CU, the left inner surface 5CL and the right inner surface 5CR can be reflected by these stepped sections to the outside of the concave section for a hood 5C.

Accordingly, upon the video filming or the picture photographing of the subject, even when the light source of the surroundings emits light having a relatively high brightness, the lens hood 5 can remarkably reduce the light having the high brightness entering the incident planes 3A and 4A of the image capture lens for a left eye 3 and the image capture lens for a right eye 4 by emission of the light source.

Further, in the lens hood 5, a main body of a flash 10 is accommodated in an inner space over the concave section for a hood 5C, and a light emitting surface 10A of the flash 10 is exposed to an upper side of the tip opening 5CY of the hood tip surface 5BX.

That is, in the lens hood 5, the light emitting surface 10A of the flash 10 in the upper end section of the hood tip surface 5BX is exposed toward the front of the hood tip surface SBX.

Then, the hood tip surface 5BX of the lens hood 5 is disposed in front of the incident planes 3A and 4A of the image capture lens for a left eye 3 and the image capture lens for a right eye 4.

For this reason, upon the video filming or the picture photographing of the subject, the video camera 1 can illuminate the subject using the flash 10 by moving the light emitting surface 10A of the flash 10 closer to the subject than the incident planes 3A and 4A of the image capture lens for a left eye 3 and the image capture lens for a right eye 4.

Further, a microphone cover 5BY in which a plurality of fine holes are formed is formed at the hood section 5B of the lens hood 5 under the tip opening 5CY Then, a microphone (not shown) is accommodated in an inner space in the lens hood 5 under the concave section for a hood 5C.

Accordingly, upon the video filming of the subject, the video camera 1 can collect and record surrounding sound with the microphone via the microphone cover 5BY while capturing an image of the subject.

However, the microphone is accommodated near the housing rear end section to be spaced apart from the microphone cover 5BY with respect to the lens hood 5 as much as possible. Accordingly, when the surrounding sound is collected by the microphone while capturing the image of the subject, the video camera 1 can prevent a wind noise generated when the surrounding wind collides with the microphone cover 5BY from being collected at a larger volume than the surrounding sound as much as possible.

Here, a finger grip section 2AX having substantially a ridge shape elongated in the housing longitudinal direction is formed at the upper surface 2A of the camera housing 2 near the housing right end section. In addition, a zoom lever 11 and a shutter button 12 configured to instruct the above-mentioned picture photographing are installed in parallel in the housing longitudinal direction near the housing rear end section of the finger grip section 2AX.

Accordingly, in the video camera 1, when the housing right end section of the camera housing 2 is held by a right hand such that a palm faces the right side surface 2C and the lower surface 2B and the upper surface 2A are sandwiched by the thumb and another finger, a finger tip of the other finger can be placed on the finger grip section 2AX.

That is, in the video camera 1, when the housing right end section of the camera housing 2 is held by the right hand, for example, finger tips of at least the index finger and the middle finger can be placed on the finger grip section 2AX.

Accordingly, while the twin lens type video camera 1 has a larger width, for example, than the single lens type video camera to an extent to which the image capture lens for a left eye 3 and the image capture lens for a right eye 4 are disposed in parallel in the housing widthwise direction, the video camera 1 can be stably held by the right hand only.

In addition, in the video camera 1, since the zoom lever 11 and the shutter button 12 are disposed at the finger grip section 2AX near the housing rear end section, when the video camera 1 is held by the right hand, for example, the zoom lever 11 and the shutter button 12 can be easily manipulated by the finger tip of the index finger.

Further, a recording button 13 configured to instruct start of the above-mentioned video filming and stop of the video filming is installed at a rear surface 2E of the camera housing 2 near the housing right end section.

Furthermore, belt attachment hooks 14 and 15 are installed at the right side surface 2C of the camera housing 2 near the housing front end section and the housing rear end section.

Then, the camera housing 2 can attach a belt (not shown) to face the right side surface 2C via the belt attachment hooks 14 and 15.

Accordingly, the video camera 1 can be held by passing the palm of the right hand with the four fingers other than the thumb between the right side surface 2C and the belt.

Then, when the video camera 1 is held using the belt, the recording button 13 can be easily manipulated by the thumb while stably holding by grabbing the rear surface 2E with the thumb of the right hand.

Further, a display unit 17 having a substantially flat rectangular shape is installed on the left side surface 2D of the camera housing 2 to be opened and closed via a hinge section 16 installed at the left side surface 5AY of the body section 5A of the lens hood 5.

In this case, the display unit 17 includes a display panel (not shown) such as a liquid crystal display, an organic electro luminescence (EL) display, or the like, installed at an inner surface thereof.

In addition, the display unit 17 has a predetermined thickness, and when the inner surface of the left side surface 2D is closed to oppose the left side surface 2D of the camera housing 2, an outer surface 17A is disposed on an extension portion of the left side surface 5AY of the body section 5A of the lens hood 5.

Accordingly, when the display unit 17 is closed with respect to the camera housing 2, the entire video camera 1 is integrated to form a block having a substantially rectangular parallelepiped shape to enable, for example, easy portability.

Further, when the display unit 17 is opened with respect to the camera housing 2, the video camera 1 can display an image for a left eye and an image for a right eye on the display panel of the display unit 17 based on the image data for a left eye and the image data for a right eye.

Accordingly, the video camera 1 can stereoscopically display the image for a left eye and the image for a right eye displayed on the display panel of the display unit 17 as an image obtained by simultaneously capturing images of the same subject by the image capture unit for a left eye and the image capture unit for a right eye.

Here, a battery pack 18 is detachably mounted on the rear surface 2E of the camera housing 2. In addition, in the body section 5A of the lens hood 5, for example, a manual dial 19 configured to select photographing conditions is installed at a bottom right corner of a stepped surface SAZ with respect to the hood section 5B formed at the tip section near the housing left end section.

### [1-2. Configuration of lens unit]

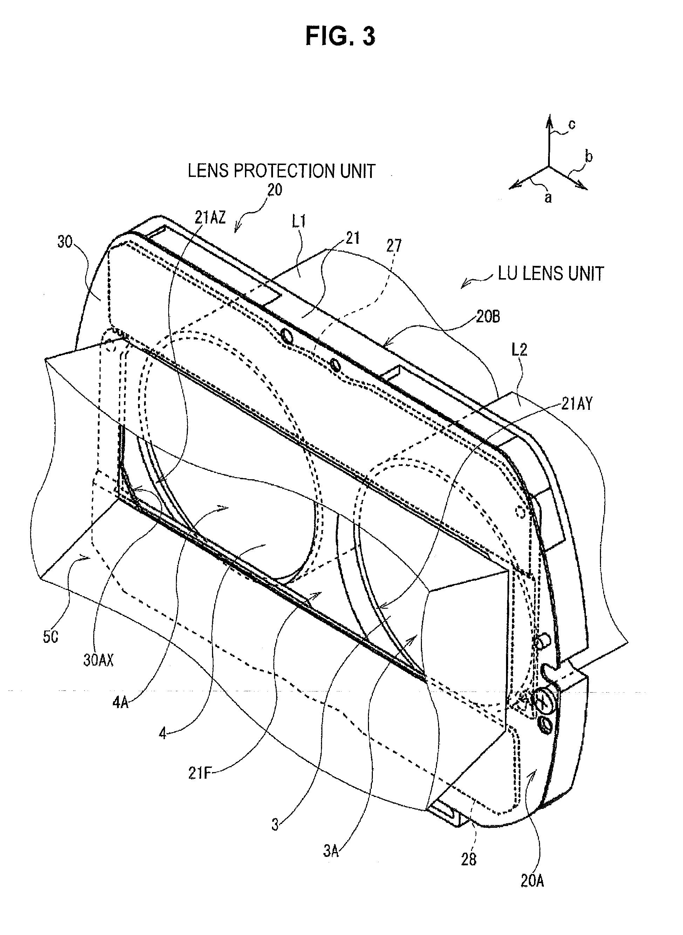

Next, a configuration of a lens unit LU installed at the video camera 1 will be described with reference to Fig. 3. The lens unit LU is constituted by a lens barrel for a left eye L1 and a lens barrel for a right eye L2, and a lens protection unit 20 configured to protect the image capture lens for a left eye 3 and the image capture lens for a right eye 4. In this case, the lens protection unit 20 has one surface 20A and the other surface 20B, which have for example substantially a racetrack shape.

Here, in the following description, the one surface 20A of the lens protection unit 20 is referred to as one protection unit surface 20A, and the other surface 20B is referred to as the other protection unit surface 20B. In addition, in the following description, two opposite directions along a long side of the lens protection unit 20 are referred to as a protection unit longitudinal direction.

Further, in the following description, two opposite directions along a short side of the lens protection unit 20 perpendicular to the long side are referred to as a protection unit short side direction.

In this case, the one protection unit surface 20A is directed in the forward direction, the protection unit longitudinal direction is parallel to the housing widthwise direction, and the lens protection unit 20 is accommodated in the body section 5A of the lens hood 5 to be disposed between the bottom opening 5CX and tips of the lens barrel for a left eye L1 and the lens barrel for a right eye L2.

That is, the lens protection unit 20 is accommodated in the body section 5A of the lens hood 5 to be disposed in front of the incident planes 3A and 4A of the image capture lens for a left eye 3 and the image capture lens for a right eye 4 exposed to the tips of the lens barrel for a left eye L1 and the lens barrel for a right eye L2.

In addition, the lens protection unit 20 is accommodated in the body section 5A of the lens hood 5 while the protection unit longitudinal direction is parallel to the housing longitudinal direction. For this reason, one of the two opposite directions along the long side of the lens protection unit 20 is a leftward direction, and the other direction is a rightward direction. In addition, one of the two opposite directions along the short side of the lens protection unit 20 is an upward direction, and the other direction is a downward direction.

### [1-3. Configuration of lens protection unit]

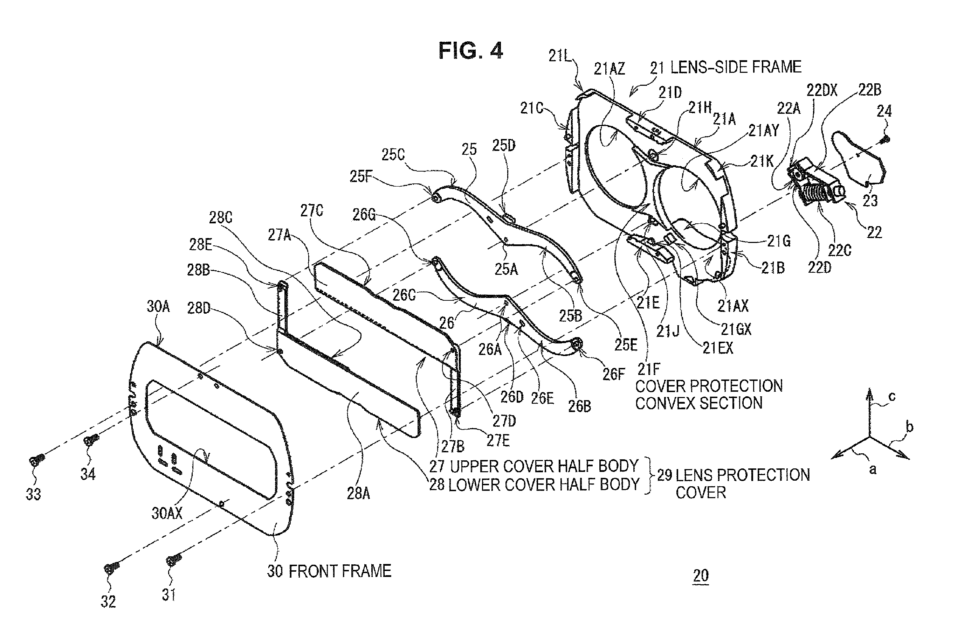

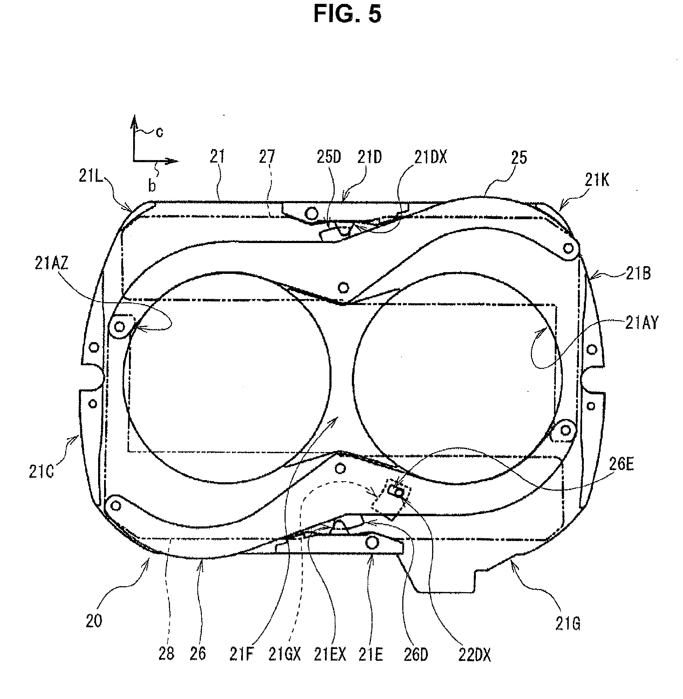

Next, a configuration of the lens protection unit 20 will be described with reference to Figs. 4 and 5 along with Fig. 3. The lens protection unit 20 has a substantially racetrack-shaped lens-side frame 21 disposed in front of the incident planes 3A and 4A of the image capture lens for a left eye 3 and the image capture lens for a right eye 4 (i.e., positioned closest to the incident planes 3A and 4A in a direction toward the incident planes 3A and 4A).

For example, the lens-side frame 21 is generally and integrally formed of a predetermined resin material and has a substantially racetrack-shaped base plate 21A.

Further, two circular pores 21AY and 21AZ having a predetermined diameter larger than that of the image capture lens for a left eye 3 and the image capture lens for a right eye 4 and configured to expose the incident planes 3A and 4A are formed in parallel in one surface 21AX of the base plate 21A to be spaced apart from each other in the protection unit longitudinal direction.

In addition, a left support section 21B and a right support section 21C protrude from the one surface 21AX of the base plate 21A at the left end section and the right end section. Further, an upper support section 21D and a lower support section 21E protrude from the one surface 21AX of the base plate 21A at a central portion of the upper end section and a central portion of the lower end section.

Here, the left support section 21B, the right support section 21C, the upper support section 21D and the lower support section 21E are set to have the same height from the one surface 21AX of the base plate 21A to an apex.

Further, a cover protection convex section 21F protruding forward from an interval section between the two pores 21AY and 21AZ in front of the entire interval section (the bottom opening 5CX of the lens hood 5) is formed at the one surface 21AX of the base plate 21A.

Here, for example, the cover protection convex section 21F is configured to be drilled out from the other surface side of the base plate 21 A, which is the other protection unit surface 20B of the lens protection unit 20, toward the one surface 21AX, with respect to the base plate 21A.

Then, the cover protection convex section 21F is configured such that a height from the one surface 21AX of the base plate 21A to a convex surface of the cover protection convex section 21F (i.e., a flat surface of an apex of the cover protection convex section, 21F) is set to a predetermined height smaller than the left support section 21B.

Further, a basin-shaped actuator accommodating section 21G is formed at the other surface of the base plate 21A at the bottom left corner section. Then, an electromagnetic actuator 22 is accommodated in the actuator accommodating section 21 G.

Here, in the electromagnetic actuator 22, a stator coil 22C is held at one end sections of a pair of yokes 22A and 22B, and a rotor 22D having a permanent magnet is disposed between the other end sections of the pair of yokes 22A and 22B.

Then, in the rotor 22D of the electromagnetic actuator 22, one end surface of the rotor 22D is opposite to a bottom surface of the actuator accommodating section 21G (i.e., the other surface of the base plate 21A) to be pivotally hinged at a shaft section (not shown) installed at the bottom surface.

In addition, a plate-shaped lid unit 23 is attached to an opening of the actuator accommodating section 21G via a screw 24. Accordingly, the actuator accommodating section 21G is held without separation of the electromagnetic actuator 22.

Here, the electromagnetic actuator 22 is a current-controlled actuator configured to pivot the rotor 22D in one and the other rotational directions according to a supply direction of current supplied to the stator coil 22C within a predetermined angle range.

Then, in the electromagnetic actuator 22, a pivotal movement transmission protrusion 22DX protrudes from one end surface of the rotor 22D at a predetermined position of a side surface of the rotor 22D.

In addition, a pivotal movement transmission pore 21 GX having an arc-shaped long hole is drilled in a bottom surface of the actuator accommodating section 21G to be opposite to a displacement range of the pivotal movement transmission protrusion 22DX according to pivotal movement of the rotor 22D of the electromagnetic actuator 22.

Accordingly, in the actuator accommodating section 21G, the pivotal movement transmission protrusion 22DX of the electromagnetic actuator 22 passes through the pivotal movement transmission pore 21GX to protrude toward the one surface 21AX of the base plate 21A.

Further, an upper shaft section 21H is installed at the one surface 21AX of the base plate 21A near the upper end section of the cover protection convex section 21F, and a lower shaft section 21J is installed near the lower end section of the cover protection convex section 21F.

Then, the upper shaft section 21H of the base plate 21A is inserted into a bearing pore 25A drilled near an inner wall of a center of one surface of an upper cover driving plate 25 having substantially a W shape (i.e., an intermediate position from a left end to a right end of the upper cover driving plate 25).

Actually, one surface of the upper cover driving plate 25 is opposite to the one surface 21AX of the base plate 21A, inner walls of a left arm section 25B and a right arm section 25C having a bow shape are directed to the pores 21AY and 21AZ, and thus the upper shaft section 21H is inserted into the bearing pore 25A.

However, in the upper cover driving plate 25, a plate-shaped locking protrusion 25D near an outer wall of a center of one surface is formed to protrude outward from the outer wall. In addition, the lens-side frame 21 has a plate-shaped anti-separation protrusion 21DX formed at a central section of the lower sidewall opposite to the lower support section 21 E in the upper support section 21D.

Then, in the lens-side frame 21, a locking protrusion 25D of the upper cover driving plate 25 is fitted between an anti-separation protrusion 21DX of the upper support section 21D and the one surface 21AX of the base plate 21A.

Accordingly, the lens-side frame 21 pivotally holds the upper cover driving plate 25 about the upper shaft section 21H, and prevents the upper cover driving plate 25 from being separated.

In addition, rotation restriction sections 2 1 K and 21 L protrude from the one surface 21AX of the base plate 21A at a top left corner section and a top right corner section, respectively. Accordingly, in the lens-side frame 21, when the upper cover driving plate 25 is rotated clockwise when seen from the bottom opening 5CX side of the lens hood 5, a predetermined portion of the outer wall of the right arm section 25C comes in contact with the rotation restriction section 21L of a right side to restrict rotation thereof.

In addition, in the lens-side frame 21, when the upper cover driving plate 25 is rotated counterclockwise when seen from the bottom opening 5CX side of the lens hood 5, a predetermined portion of the outer wall of the left arm section 25B comes in contact with the rotation restriction section 21K of a left side to restrict rotation thereof.

Accordingly, the lens-side frame 21 pivotally holds the upper cover driving plate 25 within a predetermined angle range in which the left arm section 25B and the right arm section 25C do not enter the pores 21AY and 21AZ.

In addition, the lower shaft section 21J of the base plate 21A is inserted into a bearing pore 26AX drilled near an inner wall of a center of one surface of a lower cover driving plate 26 having substantially a W shape (i.e., an intermediate position from a left end to a right end of the lower cover driving plate 26).

Actually, one surface of the lower cover driving plate 26 is opposite to the one surface 21AX of the base plate 21A, inner walls of a left arm section 26B and a right arm section 26C having a bow shape are directed to the pores 21AY and 21 AZ, and thus the lower shaft section 21J is inserted into the bearing pore 26A.

Here, the lower cover driving plate 26 is formed to have the same shape and size as the upper cover driving plate 25. Accordingly, the lower cover driving plate 26 is also configured such that a plate-shaped locking protrusion 26D protrudes outward from the outer wall near the outer wall of the center of the one surface.

In addition, the lens-side frame 21 has a plate-shaped anti-separation protrusion 21EX formed at a central section of an upper sidewall opposite to the upper support section 21D in the lower support section 21E.

Then, in the lens-side frame 21, a locking protrusion 26D of the lower cover driving plate 26 is fitted between the anti-separation protrusion 21EX of the lower support section 21E and the one surface 21 AX of the base plate 21A.

Accordingly, the lens-side frame 21 pivotally holds the lower cover driving plate 26 about the lower shaft section 21 J, and prevents the lower cover driving plate 26 from being separated.

However, the lower cover driving plate 26 has a protrusion insertion pore 26E, which is a long hole, drilled at the left arm section 26B side of the one surface to correspond to the displacement range of the pivotal movement transmission protrusion 22DX according to pivotal movement of the rotor 22D of the electromagnetic actuator 22. Then, in the lower cover driving plate 26, the pivotal movement transmission protrusion 22DX of the electromagnetic actuator 22 is inserted into the protrusion insertion pore 26E.

Accordingly, in the lower cover driving plate 26, pivotal movement of the rotor 22D is transmitted as displacement of the pivotal movement transmission protrusion 22DX according to pivotal movement of the rotor 22D of the electromagnetic actuator 22.

As a result, the lower cover driving plate 26 can be pivoted about the lower shaft section 21J of the lens-side frame 21 according to displacement of the pivotal movement transmission protrusion 22DX of the electromagnetic actuator 22.

Then, a lens protection cover 29 having a substantially rectangular plate by an upper cover half body 27 and a lower cover half body 28, which are substantially L-shaped plates is attached to the upper cover driving plate 25 and the lower cover driving plate 26.

Actually, in the upper cover driving plate 25, a left shaft section 25E is installed at the tip section of the left arm section 25B in the other surface, and a right shaft section 25F is installed at the tip section of the right arm section 25C.

In addition, in the lower cover driving plate 26, a left shaft section 26F is installed at the tip section of the left arm section 26B in the other surface, and a right shaft section 26G is installed at the tip section of the right arm section 26C.

Meanwhile, the upper cover half body 27 is integrally formed of, for example, a predetermined resin material in substantially an L shape. Then, the upper cover half body 27 has a substantially rectangular plate-shaped upper cover main body 27A having a relatively large width, and a substantially oblong arm section 27B having an appropriately selected length and a relatively small width.

Here, in the upper cover half body 27, a length of the upper cover main body 27A (i.e., a length in the protection unit longitudinal direction) is appropriately selected according to, for example, a width of the bottom opening 5CX of the lens hood 5 (i.e., a length in the housing widthwise direction).

In addition, in the upper cover half body 27, a width of the upper cover main body 27A (i.e., a length in the protection unit short side direction) is appropriately selected according to, for example, a radius of the image capture lens for a left eye 3 and the image capture lens for a right eye 4.

Then, the main body-side bearing pore 27D is drilled in one surface 27C of the upper cover half body 27 at a corner section of a disposition side of the arm section 27B in the upper cover main body 27A, and an arm section-side bearing pore 27E is drilled in the tip section of the arm section 27B.

Further, the lower cover half body 28 is integrally formed of, for example, a predetermined resin material in substantially an L shape to have the same shape and size as the upper cover half body 27, and has a substantially rectangular plate-shaped lower cover main body 28A having a relatively large width and a substantially oblong arm section 28B having a relatively small width.

One surface 28C of the lower cover half body 28 has a main body-side bearing pore 28D drilled at a corner section of a disposition side of the arm section 28B in the lower cover main body 28A and an arm section-side bearing pore 28E drilled at a tip section of the arm section 28B.

In this case, in the upper cover half body 27, in a state in which the one surface 27C is directed toward the one surface 21AX of the lens-side frame 21, the left shaft section 25E of the upper cover driving plate 25 is inserted into a main body-side bearing pore 27D.

In addition, in the upper cover half body 27, in a state in which the one surface 27C is directed toward the one surface 21AX of the lens-side frame 21, the left shaft section 26F of the lower cover driving plate 26 is inserted into the arm section-side bearing pore 27E.

Meanwhile, in the lower cover half body 28, in a state in which the one surface 28C is directed toward the one surface 21AX of the lens-side frame 21, the right shaft section 26G of the lower cover driving plate 26 is inserted into the main body-side bearing pore 28D.

In addition, in the lower cover half body 28, in a state in which the one surface 28C is directed toward the one surface 21AX of the lens-side frame 21, the right shaft section 25F of the upper cover driving plate 25 is inserted into the arm section-side bearing pore 28E.

As a result, the upper cover half body 27 and the lower cover half body 28 are connected to the upper cover driving plate 25 and the lower cover driving plate 26 to be displaced according to pivotal movement of the upper cover driving plate 25 and the lower cover driving plate 26.

The lens protection unit 20 has a plate-shaped front frame 30 disposed in front of the lens protection cover 29 (i.e., disposed at a position spaced maximally from the incident planes 3A and 4A of the image capture lens for a left eye 3 and the image capture lens for a right eye 4).

In this case, the front frame 30 is formed of, for example, a predetermined resin material to have a substantially racetrack-shaped appearance. In addition, a long hole 30AX (i.e., elongated in the protection unit longitudinal direction) is drilled at a central section of one surface 30A of the front frame 30 to simultaneously expose the incident planes 3A and 4A of the image capture lens for a left eye 3 and the image capture lens for a right eye 4.

Then, the other surface of the front frame 30, which is the one protection unit surface 20A of the lens protection unit 20, is directed toward the bottom opening 5CX of the lens hood 5, the one surface 30A is directed toward the one surface 21AX of the lens-side frame 21, and the front frame 30 is attached to the lens-side frame 21 via screws 31 to 34.

As a result, the lens protection unit 20 is formed to accommodate the upper cover driving plate 25 and the lower cover driving plate 26, and the upper cover half body 27 and the lower cover half body 28, which are connected to each other, between the lens-side frame 21 and the front frame 30.

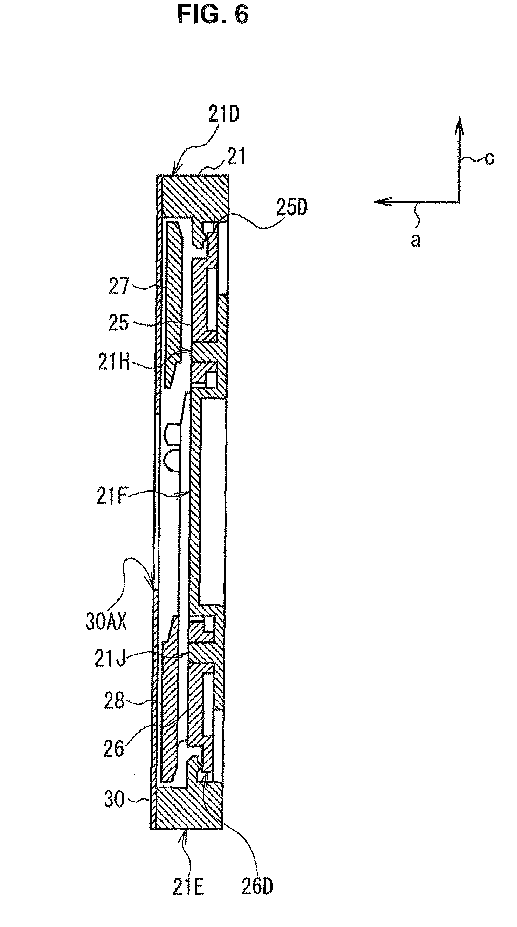

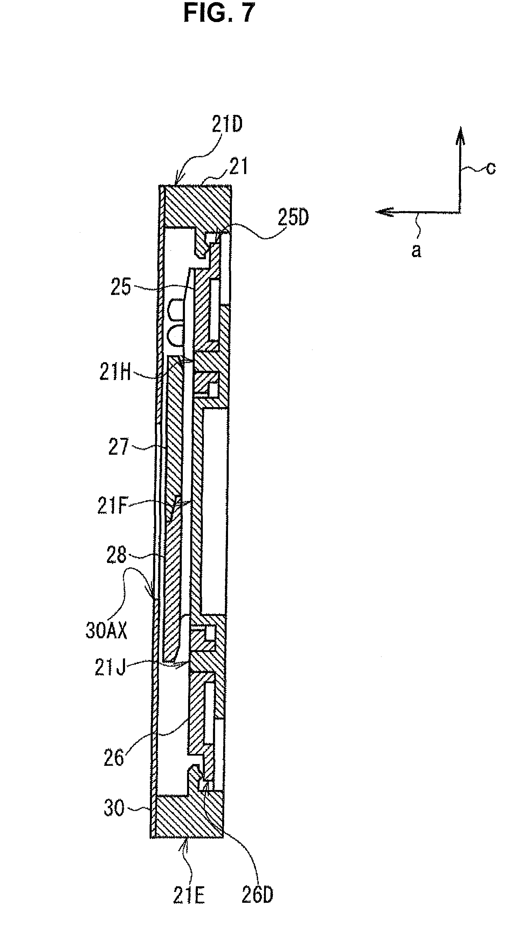

Here, as shown in Figs. 6 and 7, the upper cover driving plate 25 is set to have a predetermined thickness equal to or smaller than the height of the cover protection convex section 21F of the above-mentioned lens-side frame 21.

Then, the upper cover driving plate 25 is disposed between an upper end section of the cover protection convex section 21F and the upper support section 21D of the lens-side frame 21 at a concave portion widened in a holding section longitudinal direction.

In addition, the lower cover driving plate 26 is set to have a thickness equal to the thickness of the upper cover driving plate 25 (i.e., a predetermined thickness equal to or smaller than the height of the cover protection convex section 21F of the above-mentioned lens-side frame 21).

Then, the lower cover driving plate 26 is disposed between a lower end section of the cover protection convex section 21F and the lower support section 21E of the lens-side frame 21 at a concave portion widened in the holding section longitudinal direction.

Further, the upper cover half body 27 is set to have a predetermined thickness slightly smaller (i.e., thinner) than a length from a convex surface of the cover protection convex section 21F to an apex of the upper support section 21D of the lens-side frame 21. Furthermore, the lower cover half body 28 is set to have a thickness equal to the thickness of the upper cover half body 27.

Then, the upper cover half body 27 and the lower cover half body 28 are attached to the upper cover driving plate 25 and the lower cover driving plate 26 to be disposed in front of the upper cover driving plate 25 and the lower cover driving plate 26.

Accordingly, the upper cover half body 27 and the lower cover half body 28 can be displaced in a space between the convex surface of the cover protection convex section 21F and the front frame 30 according to pivotal movement of the upper cover driving plate 25 and the lower cover driving plate 26.

Actually, in the lens protection unit 20, for example, upon start or stop of the video camera 1, an actuator control current is supplied to the stator coil 22C of the electromagnetic actuator 22 by varying a supply direction thereof from a control unit (to be described later) in the camera housing 2 via a driver.

Then, the electromagnetic actuator 22 rotates the rotor 22D clockwise or counterclockwise via the yokes 22A and 22B according to the supply direction of the actuator control current by the stator coil 22C.

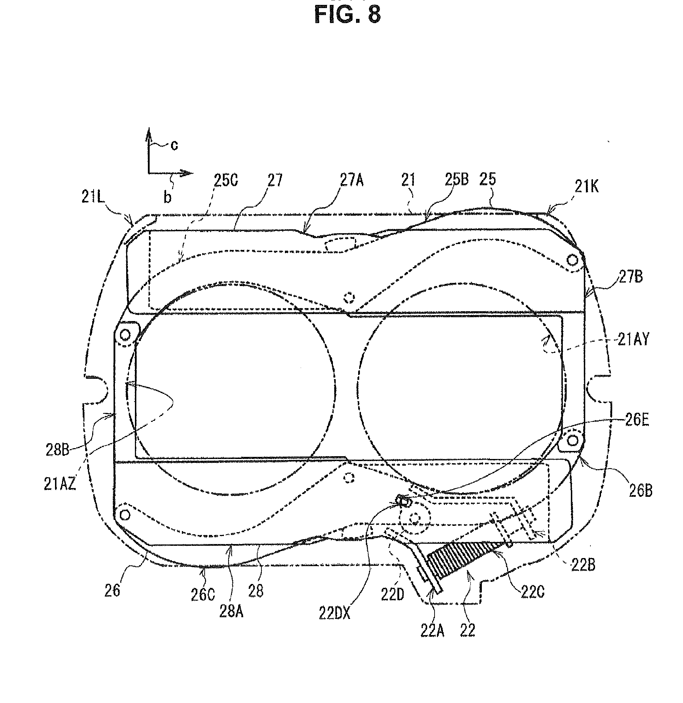

As shown in Fig. 8, for example, when the rotor 22D of the electromagnetic actuator 22 is rotated clockwise, the lens protection unit 20 transmits clockwise rotation of the rotor 22D to the lower cover driving plate 26 as displacement of the pivotal movement transmission protrusion 22DX.

That is, in the lower cover driving plate 26, when the rotor 22D is rotated clockwise, an upper side of an inner wall of the protrusion insertion pore 26E drilled at a left side of the bearing pore 26A is pressed toward an upper left side by the pivotal movement transmission protrusion 22DX displaced according to rotation of the rotor 22D.

Accordingly, the lower cover driving plate 26 is rotated counterclockwise about the lower shaft section 21J of the lens-side frame 21 inserted into the bearing pore 26A according to displacement of the pivotal movement transmission protrusion 22DX according to clockwise rotation of the rotor 22D.

Accordingly, the lower cover driving plate 26 displaces the tip section of the left arm section 26B upward, and pushes the upper cover main body 27A upward with the arm section 27B of the upper cover half body 27 connected to the left arm section 26B.

In addition, here, the lower cover driving plate 26 displaces the tip section of the right arm section 26C downward, and lowers the arm section 28B with the lower cover main body 28A of the lower cover half body 28 connected to the right arm section 26C.

Accordingly, here, the upper cover driving plate 25 displaces the left arm section 25B connected thereto upward according to upward movement of the upper cover half body 27, and displaces the right arm section 25C connected thereto downward according to downward movement of the lower cover half body 28.

That is, the upper cover driving plate 25 is rotated counterclockwise about the upper shaft section 21H of the lens-side frame 21 inserted into the bearing pore 25A according to counterclockwise rotation of the lower cover driving plate 26.

Then, when the upper cover driving plate 25 is rotated counterclockwise to a predetermined angle, an outer wall of the tip portion of the left arm section 25B comes in contact with the rotation restriction section 21K of the left side of the lens-side frame 21 to stop rotation thereof, and thus also stops rotation of the lower cover driving plate 26.

As a result, the lens protection unit 20 moves (retreats) the upper cover main body 27A of the upper cover half body 27 to an upper retreat position over the image capture lens for a left eye 3 and the image capture lens for a right eye 4 while the upper cover main body 27A of the upper cover half body 27 is parallel to the housing widthwise direction.

In addition, the lens protection unit 20 moves (retreats) the lower cover main body 28A of the lower cover half body 28 to a lower retreat position under the image capture lens for a left eye 3 and the image capture lens for a right eye 4 while the lower cover main body 28A of the lower cover half body 28 is parallel to the housing widthwise direction.

That is, the lens protection unit 20 spaces the upper cover main body 27A of the upper cover half body 27 and the lower cover main body 28A of the lower cover half body 28 a predetermined distance from each other, which are parallel to each other, according to clockwise rotation of the rotor 22D of the electromagnetic actuator 22.

As a result, as shown in Fig. 1, the lens protection unit 20 retreats the lens protection cover 29 from the front sides of the incident planes 3A and 4A of the image capture lens for a left eye 3 and the image capture lens for a right eye 4.

Accordingly, the lens protection unit 20 opens the bottom opening 5CX of the lens hood 5 to simultaneously expose the incident planes 3A and 4A of the image capture lens for a left eye 3 and the image capture lens for a right eye 4, providing an image capturable state.

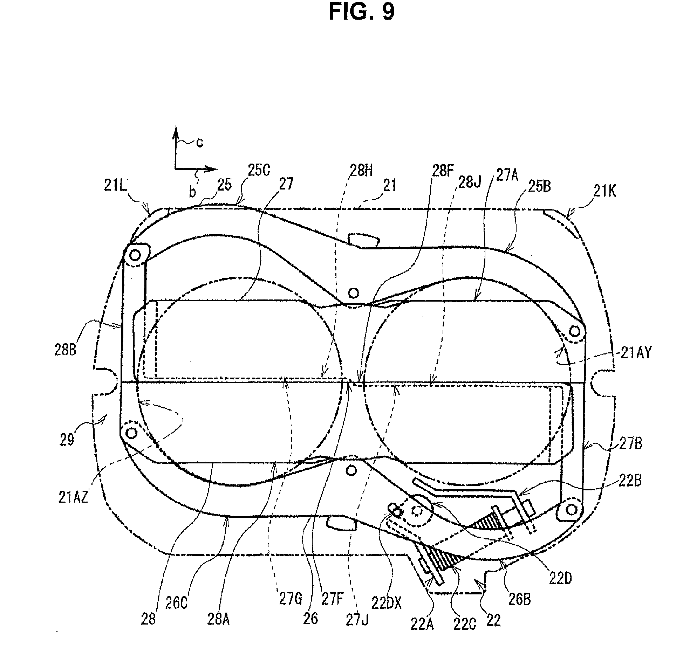

Meanwhile, as shown in Fig. 9, for example, when the rotor 22D of the electromagnetic actuator 22 is rotated counterclockwise, the lens protection unit 20 transmits counterclockwise rotation of the rotor 22D to the lower cover driving plate 26 as displacement of the pivotal movement transmission protrusion 22DX.

That is, in the lower cover driving plate 26, when the rotor 22D is rotated clockwise, a lower side of the inner wall of the protrusion insertion pore 26E is pressed toward a lower right side by the pivotal movement transmission protrusion 22DX displaced according to rotation of the rotor 22D.

Accordingly, the lower cover driving plate 26 is rotated clockwise about the lower shaft section 21J of the lens-side frame 21 inserted into the bearing pore 26A according to displacement of the pivotal movement transmission protrusion 22DX according to counterclockwise rotation of the rotor 22D.

As a result, the lower cover driving plate 26 displaces the tip section of the left arm section 26B downward, and lowers the upper cover main body 27A with the arm section 27B of the upper cover half body 27 connected to the left arm section 26B.

In addition, here, the lower cover driving plate 26 displaces the tip section of the right arm section 26C upward, and pushes the arm section 28B upward with the lower cover main body 28A of the lower cover half body 28 connected to the right arm section 26C.

Accordingly, here, the upper cover driving plate 25 displaces the left ann section 25B connected thereto downward according to downward movement of the upper cover half body 27, and displaces the right arm section 25C connected thereto upward according to upward movement of the lower cover half body 28.

That is, the upper cover driving plate 25 is rotated clockwise about the upper shaft section 21 H of the lens-side frame 21 inserted into the bearing pore 25A according to clockwise rotation of the lower cover driving plate 26.

Then, when the upper cover driving plate 25 is rotated clockwise to a predetermined angle, the outer wall of the tip portion of the right arm section 25C comes in contact with the rotation restriction section 21L of the right side of the lens-side frame 21 to stop rotation thereof, and thus also stops rotation of the lower cover driving plate 26.

As a result, the lens protection unit 20 moves upper halves of the incident planes 3A and 4A of the image capture lens for a left eye 3 and the image capture lens for a right eye 4 to an upper covering position at which they are covered from the outside while the upper cover main body 27A of the upper cover half body 27 is parallel to the housing widthwise direction.

In addition, the lens protection unit 20 moves lower halves of the incident planes 3A and 4A of the image capture lens for a left eye 3 and the image capture lens for a right eye 4 to a lower covering position at which they are covered from the outside while the lower cover main body 28A of the lower cover half body 28 is parallel to the housing widthwise direction.

As a result, in the lens protection unit 20, while the upper cover main body 27A of the upper cover half body 27 and the lower cover main body 28A of the lower cover half body 28 are parallel to each other, the lower end section of the upper cover main body 27A comes in contact with the upper end section of the lower cover main body 28A opposite thereto.

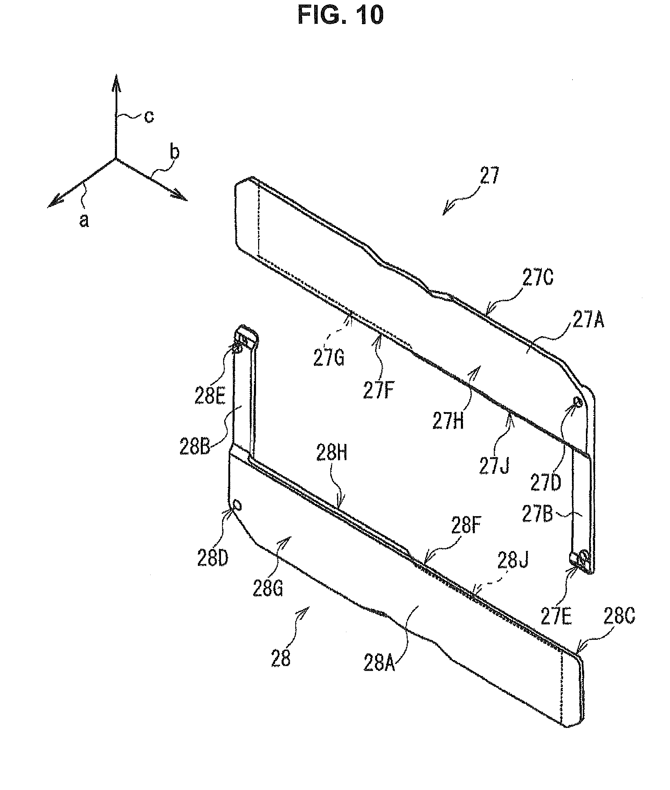

Here, as shown in Fig. 10, a cutout section 27G is formed in a lower end section of the upper cover main body 27A to reduce a thickness of the upper cover main body 27A in the holding section longitudinal direction at edge sections of a lower end surface 27F and the one surface 27C in a portion of a left side of substantially a center thereof.

In addition, an overhang section 27J having a flat tip is formed in the lower end section of the upper cover main body 27A to have a thickness smaller than the upper cover main body 27A in the holding section longitudinal direction at the edge sections of the lower end surface 27F and the other surface 27H in a portion of a right side of substantially the center thereof.

Meanwhile, an overhang section 28H having a flat tip is formed in the upper end section of the lower cover main body 28A to have a thickness smaller than the lower cover main body 28A in the holding section longitudinal direction at edge sections of a lower end surface 28F and the other surface 28G in a portion of a left side of substantially the center thereof.

In addition, a cutout section 28J is formed in the upper end section of the lower cover main body 28A to reduce a thickness of the lower cover main body 28A in the holding section longitudinal direction at the edge sections of the lower end surface 28F and the one surface 28C in a portion of a right side of substantially the center thereof.

Accordingly, here, the lens protection unit 20 fits the lower end section of the upper cover main body 27A and the lower end section of the lower cover main body 28A via the cutout section 27G and the overhang section 28H, and the overhang section 27J and the cutout section 28J, which are opposite to each other.

That is, the lens protection unit 20 (Fig. 9) integrates the upper cover half body 27 and the lower cover half body 28 in front of the incident planes 3A and 4A of the image capture lens for a left eye 3 and the image capture lens for a right eye 4 according to counterclockwise rotation of the rotor 22D of the electromagnetic actuator 22.

Accordingly, the lens protection unit 20 has the one substantially plate-shaped lens protection cover 29 having a width two times the width of the upper cover main body 27A from the upper cover half body 27 and the lower cover half body 28 in front of the incident planes 3A and 4A of the image capture lens for a left eye 3 and the image capture lens for a right eye 4.

Here, in the following description, a surface directed forward of the one lens protection cover 29 formed by integrating the upper cover half body 27 and the lower cover half body 28 is referred to as a cover front surface, and a surface directed rearward is referred to as a cover rear surface.

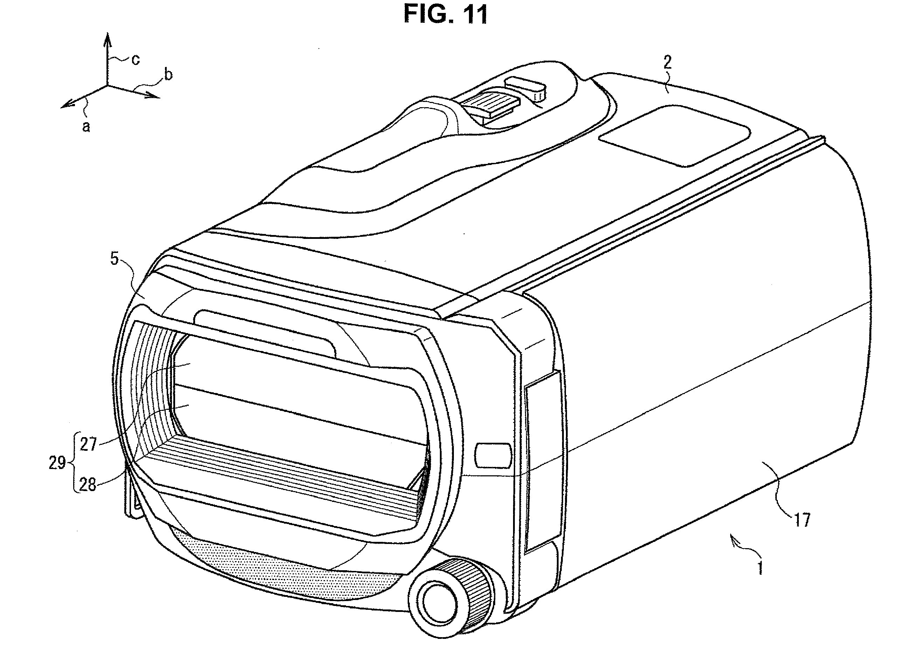

As a result, as shown in Fig. 11, the lens protection unit 20 can close the bottom opening SCX of the lens hood 5 by the lens protection cover 29 to simultaneously cover and protect the incident planes 3A and 4A of the image capture lens for a left eye 3 and the image capture lens for a right eye 4 from the outside.

### [1-4. Circuit configuration of video camera]

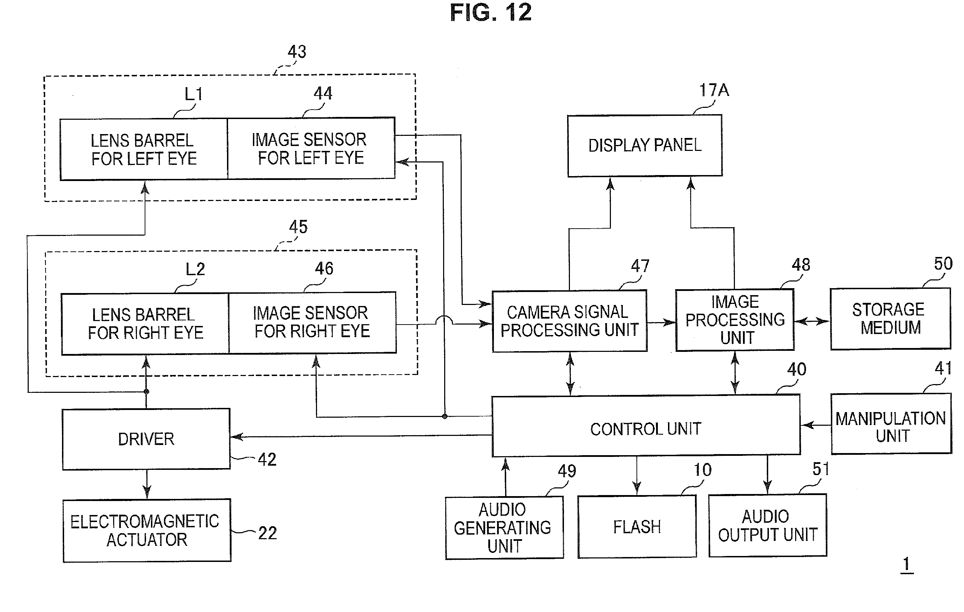

Next, a circuit configuration of the video camera 1 will be described with reference to Fig. 12. The video camera 1 has, for example, a control unit 40 having a microprocessor configuration.

The control unit 40 controls the entire video camera 1 according to various programs such as a basic program, an application program, or the like, previously stored in an internal memory, and performs a predetermined calculation processing.

In addition, the control unit 40 performs various kinds of processing according to manipulation of various manipulation buttons such as the zoom lever 11, the shutter button 12, the recording button 13, or the like, for example, a manipulation section 41 constituted by a touch panel or the like installed on a display panel 17A of the display unit 17.

Accordingly, for example, when the video camera 1 is started according to manipulation of the manipulation section 41, the control unit 40 drives and controls the electromagnetic actuator 22 via a driver 42 as described above.

Thus, the control unit 40 moves the upper cover half body 27 and the lower cover half body 2 of the lens protection unit 20 to the upper retreat position and the lower retreat position to expose the incident planes 3A and 4A of the image capture lens for a left eye 3 and the image capture lens for a right eye 4 to the outside.

Accordingly, the control unit 40 receives the imaging light coming from the photographing range including the subject at a light receiving surface of an image sensor for a left eye 44 via various optical devices including the image capture lens for a left eye 3 in the lens barrel for a left eye L1 of an image capture unit for a left eye 43.

In addition, the control unit 40 receives the imaging light coming from the photographing range including the subject at a light receiving surface of an image sensor for a right eye 46 via various optical devices including the image capture lens for a right eye 4 in the lens barrel for a right eye L2 of an image capture unit for a right eye 45.

Here, the control unit 40 appropriately drives and controls a motor (not shown) installed at the lens barrel for a left eye L1 via the driver 42 to adjust a position of a focus lens or an opening amount of an iris, which are optical devices of the lens barrel for a left eye L1.

In addition, the control unit 40 also appropriately drives and controls a motor (not shown) installed at the lens barrel for a right eye L2 via the driver 42 to adjust a position of a focus lens or an opening amount of an iris, which are optical devices of the lens barrel for a right eye L2.

Accordingly, the control unit 40 automatically adjusts a focus or exposure with respect to the photographing range of the subject of the lens barrel for a left eye L1 and the lens barrel for a right eye L2.

In addition, here, when the manipulation section 41 is manipulated to instruct a zoom, the control unit 40 drives and controls the motor installed at the lens barrel for a left eye L1 and the motor installed at the lens barrel for a right eye L2 via the driver 42 according thereto.

Accordingly, the control unit 40 moves a zoom lens, which is an optical device in the lens barrel for a left eye L1, along an optical axis thereof, and also moves a zoom lens, which is an optical device in the lens barrel for a right eye L2, along an optical axis thereof. As a result, the control unit 40 adjusts a zoom magnification to expand or narrow the photographing range.

In this state, the control unit 40 controls the image sensor for a left eye 44 and the image sensor for a right eye 46. Accordingly, the image sensor for a left eye 44 photoelectrically converts the imaging light received by the light receiving surface at a predetermined period, and sequentially generates analog photoelectric conversion signals for a left eye according to the imaging light to transmit the signals to a camera signal processing unit 47 under the control of the control unit 40.

In addition, like the image sensor for a left eye 44, the image sensor for a right eye 46 also photoelectrically converts the imaging light received by the light receiving surface at a predetermined period, and sequentially generates analog photoelectric conversion signals for a right eye according to the imaging light to transmit the signals to the camera signal processing unit 47 under the control of the control unit 40.

The camera signal processing unit 47 performs a predetermined analog processing such as amplification process, noise reduction processing, or the like, on the photoelectric conversion signal for a left eye and photoelectric conversion signal for a right eye whenever a photoelectric conversion signal for a left eye and a photoelectric conversion signal for a right eye are applied from the image sensor for a left eye 44 and the image sensor for a right eye 46.

Accordingly, the camera signal processing unit 47 generates an imaging signal for a left eye and an imaging signal for a right eye, which are analog signals, based on the photoelectric conversion signal for a left eye and the photoelectric conversion signal for a right eye.

In addition, the camera signal processing unit 47 generates digital imaging data for a left eye and digital imaging data for a right eye through analog/digital conversion processing of the imaging signal for a left eye and the imaging signal for a right eye whenever the imaging signal for a left eye and the imaging signal for a right eye are generated.

Further, the camera signal processing unit 47 performs digital processing for photographing state presentation such as shading compensation processing on the imaging data for a left eye and the imaging data for a right eye, image reduction processing according to resolution of the display panel 17A of the display unit 17, or the like.

Furthermore, the camera signal processing unit 47 transmits the imaging data for a left eye and the imaging data for a right eye, which passed through the digital processing, to the display panel 17A whenever the digital processing for photographing state presentation to the imaging data for a left eye and the imaging data for a right eye is performed.

Accordingly, the camera signal processing unit 47 displays a captured image for a left eye and a captured image for a right eye like a moving image on the display panel 17A based on the imaging data for a left eye and the imaging data for a right eye.

As a result, the camera signal processing unit 47 stereoscopically shows the captured image for a left eye and the captured image for a right eye displayed on the display panel 17A to the user, and the user can recognize the photographing states of the subject such as a photographing range or composition, a focus, and so on.

In this state, after the manipulation section 41 is manipulated to instruct start of the video filming, the control unit 40 controls the camera signal processing unit 47 and the image processing unit 48 for the video filming while the manipulation section 41 is manipulated to instruct stop of the video filming.

In this case, the camera signal processing unit 47 generates the imaging data for a left eye and the imaging data for a right eye to transmit the data to the display panel 17A as described above during start to stop of the video filming, and displays the captured image for a left eye and the captured image for a right eye on the display panel 17A like a moving image.

In addition, the camera signal processing unit 47 performs digital processing for video filming such as shading compensation processing on the sequentially generated imaging data for a left eye and imaging data for a right eye, image reduction processing according to resolution selected for preliminary video filming, or the like, together with the processing.

Then, the camera signal processing unit 47 transmits the image data for a left eye and the image data for a right eye obtained by the digital processing to an image processing unit 48 whenever the digital processing for the video filming to the imaging data for a left eye and imaging data for a right eye is performed.

Here, an audio generating unit 49 including the above-mentioned microphone is installed at the video camera 1. The audio generating unit 49 collects sounds surrounding the video camera 1 via the microphone and generates an analog audio signal under the control of the control unit 40 during start to stop of the video filming.

In addition, the audio generating unit 49 performs amplification processing and analog/digital conversion processing of the audio signal to generate digital audio data, and transmits the data to the control unit 40. When the audio data is applied from the audio generating unit 49, the control unit 40 transmits the audio data to the image processing unit 48.

The image processing unit 48 performs compact encoding processing of the image data for a left eye and the image data for a right eye through a predetermined compact encoding method whenever the image data for a left eye and the image data for a right eye are applied from the camera signal processing unit 47.

In addition, here, the image processing unit 48 also performs the compact encoding processing of the audio data applied from the control unit 40 through the predetermined compact encoding method.

Further, the image processing unit 48 time-divisionally multiplexes the image data for a left eye and image data for a right eye and the audio data at each predetermined unit to generate multiplexing data while performing the compact encoding processing thereof.

Then, the image processing unit 48 transmits the multiplexing data to a storage medium 50, and records the multiplexing data on the storage medium 50. Accordingly, the control unit 40 can perform the video filming of the subject, and record the obtained image data for a left eye and image data for a right eye as the multiplexing data with the audio data to record the data on the storage medium 50.

In addition, when the manipulation section 41 is manipulated to instruct the picture photographing, the control unit 40 controls the image sensor for a left eye 44 and the image sensor for a right eye 46, and the camera signal processing unit 47 and the image processing unit 48 to perform the picture photographing.

Actually, the control unit 40 exposes the light receiving surface with the imaging light of the image sensor for a left eye 44 and the image sensor for a right eye 46 at a predetermined shutter speed to perform the picture photographing.

Accordingly, the image sensor for a left eye 44 photoelectrically converts the imaging light that exposes the light receiving surface, generates the photoelectric conversion signal for a left eye according to the exposed imaging light, and transmits the signal to the camera signal processing unit 47.

In addition, the image sensor for a right eye 46 also photoelectrically converts the imaging light that exposes the light receiving surface, generates the photoelectric conversion signal for a right eye according to the exposed imaging light, and transmits the signal to the camera signal processing unit 47.

Here, the camera signal processing unit 47 performs the same analog processing as described above on the photoelectric conversion signal for a left eye and the photoelectric conversion signal for a right eye applied from the image sensor for a left eye 44 and the image sensor for a right eye 46 to generate the imaging signal for a left eye and the imaging signal for a right eye.

In addition, the camera signal processing unit 47 performs the analog/digital conversion processing of the imaging signal for a left eye and the imaging signal for a right eye to generate the imaging data for a left eye and the imaging data for a right eye.

Further, the camera signal processing unit 47 performs the digital processing for picture photographing such as shading compensation processing on the imaging data for a left eye and the imaging data for a right eye, image reduction processing according to resolution selected for preliminary picture photographing, or the like.

Then, when the digital processing for picture photographing of the imaging data for a left eye and imaging data for a right eye is performed, the camera signal processing unit 47 transmits the image data for a left eye and the image data for a right eye obtained by the digital processing to the image processing unit 48.

When the image data for a left eye and the image data for a right eye are applied from the camera signal processing unit 47, the image processing unit 48 performs the compact encoding processing on the image data for a left eye and the image data for a right eye through the predetermined compact encoding method.

Then, the image processing unit 48 transmits the image data for a left eye and image data for a right eye passed through the compact encoding processing to the storage medium 50, and records the image data for a left eye and the image data for a right eye on the storage medium 50.

As a result, the control unit 40 can perform the picture photographing of the subject, and record the obtained image data for a left eye and image data for a right eye on the storage medium 50.

Then, for example, when the operation of the video camera 1 is stopped according to manipulation of the manipulation section 41, the control unit 40 drives and controls the electromagnetic actuator 22 via the driver 42 as described above. Accordingly, the control unit 40 moves the upper cover half body 27 and the lower cover half body 28 of the lens protection unit 20 to the upper covering position and the lower covering position to form the lens protection cover 29. Therefore, the control unit 40 covers the image capture lens for a left eye 3 and the image capture lens for a right eye 4 from the outside by the lens protection cover 29.

Here, upon the video filming or the picture photographing, the control unit 40 can appropriately control the flash 10 to emit light, and illuminate the subject for the video filming or the picture photographing.

Here, when the manipulation section 41 is manipulated to instruct a video play, the control unit 40 controls the image processing unit 48 for the video play. At this time, the image processing unit 48 reads the multiplexing data from the storage medium 50 under the control of the control unit 40.

In addition, the image processing unit 48 separates the multiplexing data into the image data for a left eye and the image data for a right eye and the audio data. Further, the image processing unit 48 performs the expansion decoding processing on the image data for a left eye and the image data for a right eye, performs the image reduction processing according to resolution of the display panel 17A, and transmits the image to the display panel 17A.

Accordingly, the image processing unit 48 displays the image for a left eye and the image for a right eye on the display panel 17A based on the image data for a left eye and the image data for a right eye as a moving image.

In addition, here, the image processing unit 48 performs the expansion decoding processing of the audio data to transmit the audio data to an audio output unit 51 including, for example, a speaker via the control unit 40.

The audio output unit 51 digital-analog-converts the audio data, performs the amplification processing to generate the audio signal, synchronizes the audio signal with the display of the image for a left eye and the image for a right eye, and outputs the sound based on the audio signal from the speaker under the control of the control unit 40.

As a result, the control unit 40 can allow the user to hear the sound recorded upon the video filming via the speaker while stereoscopically showing the image for a left eye and the image for a right eye obtained by the video filming via the display panel 17A.

In addition, when the manipulation section 41 is manipulated to instruct the photograph reproduction, the control unit 40 controls the image processing unit 48 for the photograph reproduction. Here, the image processing unit 48 reads the image data for a left eye and the image data for a right eye from the storage medium 50 under the control of the control unit 40.

Further, the image processing unit 48 performs the expansion decoding processing on the image data for a left eye and the image data for a right eye, performs the image reduction processing according to resolution of the display panel 17A, and transmits the image to the display panel 17A.

Accordingly, the image processing unit 48 displays the image for a left eye and the image for a right eye on the display panel 17A based on the image data for a left eye and the image data for a right eye like a photographic image.

As a result, the control unit 40 can stereoscopically show the image for a left eye and the image for a right eye obtained by the picture photographing to the user via the display panel 17A.

### [1-5. Operations and effects of embodiment]

According to the above-mentioned configuration, in the video camera 1, the image capture lens for a left eye 3 and the image capture lens for a right eye 4 in the lens barrel for a left eye L1 and the lens barrel for a right eye L2 are disposed in parallel in a transverse row to direct the incident planes 3A and 4A in the forward direction.

In addition, in the video camera 1, the lens protection unit 20 having the upper cover half body 27 and the lower cover half body 28 as the lens protection cover 29 is disposed in front of the image capture lens for a left eye 3 and the image capture lens for a right eye 4.

Then, when an image of the subject is captured, the video camera 1 moves the upper cover half body 27 of the lens protection unit 20 to the upper retreat position over the image capture lens for a left eye 3 and the image capture lens for a right eye 4.

In addition, the video camera 1 moves the lower cover half body 28 of the lens protection unit 20 to the lower retreat position under the image capture lens for a left eye 3 and the image capture lens for a right eye 4.

Accordingly, the video camera 1 retreats the lens protection cover 29 from the front of the incident planes 3A and 4A of the image capture lens for a left eye 3 and the image capture lens for a right eye 4, simultaneously exposes the incident planes 3A and 4A to the outside, and holds the subject in an image capturable state.

Meanwhile, when the image of the subject is not captured, the video camera 1 moves the upper cover half body 27 of the lens protection unit 20 from the upper retreat position to the upper covering position corresponding to upper halves of the incident planes 3A and 4A of the image capture lens for a left eye 3 and the image capture lens for a right eye 4.

In addition, the video camera 1 moves the lower cover half body 28 of the lens protection unit 20 from the lower retreat position to the lower covering position corresponding to lower halves of the incident planes 3A and 4A of the image capture lens for a left eye 3 and the image capture lens for a right eye 4.

Accordingly, in the video camera 1, the one plate-shaped lens protection cover 29 formed by integrating the upper cover half body 27 and the lower cover half body 28 is disposed in front of the incident planes 3A and 4A of the image capture lens for a left eye 3 and the image capture lens for a right eye 4.

Accordingly, in the video camera 1, when the image of the subject is not captured, the incident planes 3A and 4A of the image capture lens for a left eye 3 and the image capture lens for a right eye 4 are simultaneously covered by the one lens protection cover 29 from the outside to prevent damage or contamination thereof.

According to the above-mentioned configuration, in the video camera 1, the image capture lens for a left eye 3 and the image capture lens for a right eye 4 are disposed in a transverse row to direct the incident planes 3A and 4A in the forward direction, and the lens protection unit 20 having the lens protection cover 29 constituted by the upper cover half body 27 movable between the upper retreat position and the upper covering position and the lower cover half body 28 movable between the lower retreat position and the lower covering position is disposed in front of the image capture lens for a left eye 3 and the image capture lens for a right eye 4. Accordingly, when the image of the subject is captured, the video camera 1 can move the upper cover half body 27 to the upper retreat position, move the lower cover half body 28 to the lower retreat position to retreat the lens protection cover 29 from the front of the incident planes 3A and 4A of the image capture lens for a left eye 3 and the image capture lens for a right eye 4, and expose the two incident planes 3A and 4A to the outside. In addition, when the image of the subject is not captured, the video camera 1 can move the upper cover half body 27 to the upper covering position, move the lower cover half body 28 to the lower covering position, dispose the one lens protection cover 29 in front of the incident planes 3A and 4A of the image capture lens for a left eye 3 and the image capture lens for a right eye 4, and simultaneously cover the two incident planes 3A and 4A from the outside. Accordingly, the video camera 1 can easily protect the image capture lens for a left eye 3 and the image capture lens for a right eye 4 through a simple configuration.

In addition, in the video camera 1, the cover protection convex section 21F protruding forward may be formed at the interval section between the two pores 21AY and 21AZ of the lens-side frame 21 of the lens protection unit 20.

Accordingly, even when the cover front surface of the lens protection cover 29 disposed in front of the image capture lens for a left eye 3 and the image capture lens for a right eye 4 is pushed by a finger by mistake and the lens protection cover 29 is warped to allow the cover rear surface to protrude rearward, the video camera 1 can bring the cover rear surface in contact with the convex surface of the cover protection convex section 21F.

Accordingly, even when the cover front surface is pushed when the image capture lens for a left eye 3 and the image capture lens for a right eye 4 are covered from the outside by the lens protection cover 29, the video camera 1 can prevent the cover rear surface from coming in contact with the incident planes 3A and 4A.

That is, even when the cover front surface of the lens protection cover 29 is pushed, the video camera 1 can securely prevent the incident planes 3A and 4A from being damaged by the cover rear surface and protect the image capture lens for a left eye 3 and the image capture lens for a right eye 4.

Here, in the video camera 1, when the lens protection cover 29 is disposed in front of the incident planes 3A and 4A of the image capture lens for a left eye 3 and the image capture lens for a right eye 4, the convex surface of the cover protection convex section 21F approaches a central section of a cover rear surface of the lens protection cover 29.

Accordingly, in the video camera 1, even when the lens protection cover 29 is pushed by a finger inserted into the concave section for a hood 5C of the lens hood 5 and the cover rear surface is warped to protrude rearward, the warpage can be restricted to be reduced by the cover protection convex section 21F.

Accordingly, in the video camera 1, for example, even when the lens protection cover 29 is formed to have a relatively small thickness, damage to the lens protection cover 29 can be substantially securely prevented.

In addition, in the video camera 1, the one surface 30A of the front frame 30 is configured to approach the other surfaces 27H and 28G of the upper cover half body 27 and the lower cover half body 28 of the lens protection unit 20.

Accordingly, in the video camera 1, when the above-mentioned lens protection cover 29 is warped such that the cover front surface is pushed to allow the cover rear surface to protrude rearward, even if both of left and right end sections protrude forward by the warpage, the left and right end sections can come in contact with the one surface 30A of the front frame 30.

For this reason, in the video camera 1, even when the lens protection cover 29 allows the cover rear surface to protrude rearward and the left and right end sections to protrude forward, the warpage can be reduced as much as possible.

Accordingly, in the video camera 1, even when the lens protection cover 29 is warped, the lens protection cover 29 can be prevented from being deviated from the upper cover driving plate 25 and the lower cover driving plate 26.

In addition, in the video camera 1, as the forward and rearward flipping of the lens protection cover 29 is restricted, even when the lens protection cover 29 is formed to have a relatively small thickness, damage to the lens protection cover 29 can be further securely prevented.

Further, in the video camera 1, the upper cover half body 27 and the lower cover half body 28 of the lens protection unit 20 are connected to each other via the upper cover driving plate 25 and the lower cover driving plate 26, and the upper cover half body 27 and the lower cover half body 28 are interlocked and moved.

That is, in the video camera 1, a parallel link mechanism configured to move the upper cover half body 27 and the lower cover half body 28 in parallel is constituted by the upper cover half body 27 and the lower cover half body 28, and the upper cover driving plate 25 and the lower cover driving plate 26.

Accordingly, in the video camera 1, as the incident planes 3A and 4A of the image capture lens for a left eye 3 and the image capture lens for a right eye 4 are exposed or covered by the lens protection unit 20, deviation of movement timing of the upper cover half body 27 and the lower cover half body 28 can be prevented.

In addition, in the video camera 1, it is possible to prevent exposure or covering of any one of upper halves and lower halves of the incident planes 3A and 4A of the image capture lens for a left eye 3 and the image capture lens for a right eye 4, and thus to prevent hindrance to photographing or interference with secure protection.

Here, in the video camera 1, the lens hood 5 is installed at the housing front end section of the camera housing 2, and the image capture lens for a left eye 3 and the image capture lens for a right eye 4 are disposed in the body section 5A of the lens hood 5. In addition, in the video camera 1, the lens protection cover 29 is constituted by the upper cover half body 27 and the lower cover half body 28.

Then, in the video camera 1, the upper cover half body 27 and the lower cover half body 28 are retreated using empty spaces over and under the image capture lens for a left eye 3 and the image capture lens for a right eye 4 of the body section 5A of the lens hood 5. Accordingly, in the video camera 1, an increase in size in forward/rearward, leftward/rightward, and upward/downward directions for retreating the lens protection cover 29 can be prevented.

In addition, in the video camera 1, the upper cover driving plate 25 and the lower cover driving plate 26 configured to move the upper cover half body 27 and the lower cover half body 28 are also installed in empty spaces over and under the body section 5A of the lens hood 5.

Then, in the video camera 1, the upper cover driving plate 25 and the lower cover driving plate 26 are pivoted about the upper shaft section 21H and the lower shaft section 21 J installed between the image capture lens for a left eye 3 and the image capture lens for a right eye 4 in a surface perpendicular to the housing longitudinal direction within a restricted angle range.

Accordingly, in the video camera 1, an increase in size in forward/rearward, leftward/rightward, and upward/downward directions for pivoting the upper cover driving plate 25 and the lower cover driving plate 26 can be prevented.

Further, in the video camera 1, the flash 10 and the microphone are installed at the hood section 5B of the lens hood 5. Accordingly, in the video camera 1, an increase in size in forward/rearward, leftward/rightward, and upward/downward directions for installing the flash 10 or the microphone can be prevented.

### <2. Variants>

### [2-1 Variant 1]

In the above-mentioned embodiment, in the lens protection unit 20, the case in which the electromagnetic actuator 22 is disposed at the bottom left corner section of the other surface of the base plate 21A.

However, the present invention is not limited thereto, but in the lens protection unit 20, the electromagnetic actuator 22 may be disposed at the bottom right corner section, the top right corner section, or the top left corner section of the other surface of the base plate 21 A.

Further, in the present invention, according to a disposition position of the electromagnetic actuator 22, the upper cover driving plate 25, rather than the lower cover driving plate 26, may be pivoted by the rotor 22D of the electromagnetic actuator 22.

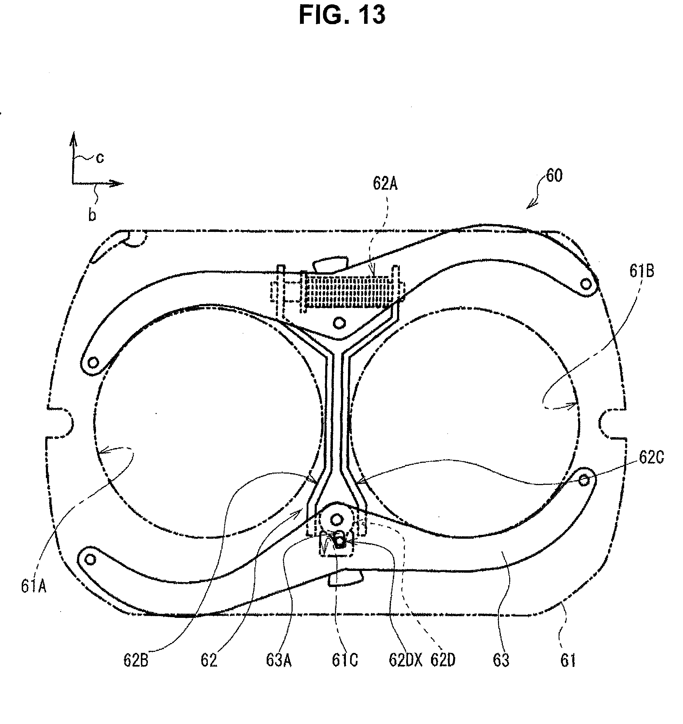

In addition, in the present invention, for example, as shown in Fig. 13, in a lens protection unit 60, an electromagnetic actuator 62 may be disposed at a central section of the other surface of a base plate 61.

In this case, in the lens protection unit 60, a stator coil 62A of the electromagnetic actuator 62 is disposed above an interval section between two pores 61A and 61B of the other surface of the base plate 61.

In addition, in the lens protection unit 60, a pair of yokes 62B and 62C configured to hold the stator coil 62A of the electromagnetic actuator 62 are disposed at the interval section between the two pores 61 A and 61 B of the other surface of the base plate 61.

Further, in the lens protection unit 60, a shaft section is installed at a lower side of the interval section of the two pores 61A and 61B of the other surface of the base plate 61, and a rotor 62D of the electromagnetic actuator 62 is pivotally hinged at the shaft section.

Furthermore, in the lens protection unit 60, a pivotal movement transmission pore 61C is drilled at a lower side of the interval section between the two pores 61A and 61B of the other surface of the base plate 61 to oppose a displacement range of a pivotal movement transmission protrusion 62DX according to pivotal movement of the rotor 62D of the electromagnetic actuator 62.

Then, in the lens protection unit 60, the pivotal movement transmission protrusion 62DX of the electromagnetic actuator 62 passes through the pivotal movement transmission pore 61C to protrude toward one surface of the base plate 61.

In addition, a lower cover driving plate 63 has a protrusion insertion pore 63A, which is a long hole, formed in a central section of one surface thereof to correspond to the displacement range of the pivotal movement transmission protrusion 62DX according to pivotal movement of the rotor 62D of the electromagnetic actuator 62.

Then, in the lower cover driving plate 63, the pivotal movement transmission protrusion 62DX of the electromagnetic actuator 62 is inserted into the protrusion insertion pore 63A.

When the present invention provides the lens protection unit 60 having the configuration related to the video camera, like the above-mentioned embodiment, the upper cover half body 27 and the lower cover half body 28 can be driven.

In addition, in the present invention, when the lens protection unit is configured as shown in Fig. 13, the pair of yokes 62B and 62C of the electromagnetic actuator 62 can be formed in the same shape, size and length. Accordingly, the present invention can secure good magnetic balance in the electromagnetic actuator 62 by the related configuration.

Further, in the present invention, according to the related configuration, the electromagnetic actuator 62 can be disposed to effectively use a space between the lens barrel for a left eye L1 and the lens barrel for a right eye L2, and the video camera 1 can be reduced in size.

### [2-2 Variant 2]

In the above-mentioned embodiment, the cutout section 27G is formed at a left half of the lower end section of the upper cover main body 27A, and the upper cover half body 27 having the overhang section 27J provided with a flat tip is used at a right half.

In addition, in the above-mentioned embodiment, the case in which the overhang section 28H having a flat tip is formed at a left half of the upper end section of the lower cover main body 28A and the lower cover half body 28 having the cutout section 28J is formed at a right half has been described.

However, the present invention is not limited thereto but the upper cover half body 27 and the lower cover half body 28 having other various shapes and into which the lower end section of the upper cover main body 27A and the upper end section of the lower cover main body 28A can be fitted may be used.

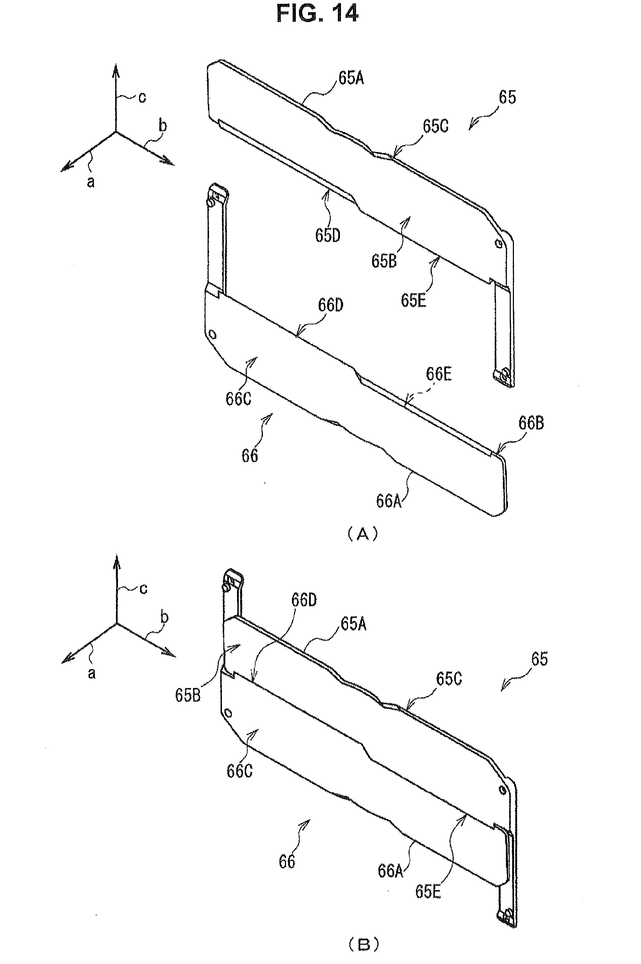

Here, as shown in Figs. 14(A) and 14(B), a cutout section 65D having an acute tip formed at the other surface 65C and inclined from one surface 65B to the other surface 65C is formed at the lower end section of an upper cover main body 65A of an upper cover half body 65 and disposed at a left side of substantially a center thereof.

In addition, in the upper cover half body 65, an overhang section 65E having an acute tip at the one surface 65B and inclined from the other surface 65C to the one surface 65B is formed at the lower end section of the upper cover main body 65A and disposed at a right side of substantially a center thereof.

Meanwhile, an overhang section 66D having an acute tip formed at the one surface 66C and inclined from the other surface 66B to one surface 66C is formed at an upper end section of a lower cover main body 66A of a lower cover half body 66 and disposed at a left side of substantially a center thereof.

In addition, in the lower cover half body 66, a cutout section 66E having an acute tip at other surface 66B and inclined from one surface 66C to the other surface 66B is formed at the upper end section of the lower cover main body 66A and disposed at a right side of a substantially center thereof.

Then, in the present invention, even when the upper cover half body 65 and the lower cover half body 66 having the related configuration are used, adhesion of the lower end section of the upper cover main body 65A and the lower end section of the lower cover main body 66A can be improved to be fitted.

Accordingly, in the present invention, according to the related configuration, when the upper cover half body 65 and the lower cover half body 66 are integrated to form the lens protection cover, a fitting state of the upper cover half body 65 and the lower cover half body 66 can be stabilized.

### [2-3 Variant 3]

Further, in the above-mentioned embodiment, in the lens protection unit 20, the upper cover half body 27 is retreated to the upper retreat position over the image capture lens for a left eye 3 and the image capture lens for a right eye 4.

In addition, in the above-mentioned embodiment, the case in which the lower cover half body 28 is retreated to the lower retreat position under the image capture lens for a left eye 3 and the image capture lens for a right eye 4 has been described.

However, the present invention is not limited thereto, but in the lens protection unit, both of the upper cover half body and the lower cover half body may be retreated to one of the upper retreat position or the lower unit position over or under the image capture lens for a left eye 3 and the image capture lens for a right eye 4.

In addition, in the present invention, the lens protection cover may be one undivided plate or sheet and the one lens protection cover may be retreated to one of the upper retreat position or the lower unit position over or under the image capture lens for a left eye 3 and the image capture lens for a right eye 4.

Further, in the present invention, in the case of the related configuration, for example, the lens protection cover may be previously formed in a shape in which a central portion protrudes toward a front side in the housing widthwise direction, and the lens protection cover may be retreated to be rotated about a shape parallel to the housing widthwise direction.

In the present invention, according to the related configuration, even when the lens protection cover is formed as one plate or sheet, an increase in size in the housing height direction of the video camera for securing a space in which the lens protection cover is retreated can be avoided as much as possible.

### [2-4 Variant 4]

Further, in the above-mentioned embodiment, the case in which the lens protection device of the present invention is applied to the above-mentioned lens protection unit 20 with reference to Figs. 1 to 14 has been described.

However, the present invention is not limited thereto but may be applied to the lens protection device having other kinds of configurations such as a lens protection unit configured to manually move the lens protection cover, a lens protection unit detachably attached to an image capture device such as a video camera, a still camera, and so on.

### [2-5 Variant 5]

Further, in the above-mentioned embodiment, the case in which the lens unit of the present invention is applied to the lens unit LU constituted by the lens protection unit 20, the lens barrel for a left eye L1 and the lens barrel for a right eye L2 described with reference to Figs. 1 to 14 has been described.

However, the present invention is not limited thereto but may be applied to the lens unit having other types of configurations such as a lens unit detachably attached to the image capture device such as a single lens type or twin lens type video camera and still camera having at least the lens protection unit 20, the lens barrel for a left eye L1 and the lens barrel for a right eye L2.

### [2-6 Variant 6]

Further, in the above-mentioned embodiment, the case in which the image capture device of the present invention is applied to the video camera 1 described with reference to Figs. 1 to 14 has been described.

However, the present invention is not limited thereto but may be applied to the image capture device having other types of configurations such as a personal digital assistance (PDA), a personal computer, a mobile phone and a game device having a still camera or photographing function.

### [2-7 Variant 7]

Further, in the above-mentioned embodiment, the case in which the image capture lens for a left eye 3 and the image capture lens for a right eye 4 described with reference to Figs. 1 to 14 are applied as two image capture lenses having surfaces directed in the same direction and disposed in parallel in a transverse row has been described.

However, the present invention is not limited thereto but the two image capture lenses having surfaces directed in the same direction and disposed in various directions such as a horizontal direction, a vertical direction, or the like, in a transverse row may be applied.

That is, in the present invention, the transverse row related to disposition of the two image capture lenses is not limited to one row in the leftward and rightward directions (i.e., the housing widthwise direction) according to the above-mentioned embodiment but one row in various directions such as a horizontal direction, a vertical direction, or the like, is represented as one transverse row.

Accordingly, for example, the present invention can be applied to the image capture device having an elongated camera housing and in which the two image capture lenses are disposed in a transverse row in the upward and downward directions (i.e., in this case, in a housing long side direction), the one image capture lens is used to be held in an elongated posture upon the picture photographing of the subject, the two image capture lenses are used to be held in a laterally long posture upon the video filming, and the lens protection device and the lens unit are fixedly or detachably installed at the image capture device.

### [2-8 Variant 8]

Further, in the above-mentioned embodiment, the case in which the lens protection cover 29 constituted by the upper cover half body 27 and the lower cover half body 28 described with reference to Figs. 1 to 14 is applied as the one lens protection cover disposed in front of the two surfaces of the two image capture lenses directed in the same direction and disposed in a transverse row, and movably installed between the covering position at which the two surfaces are covered from the outside and the retreat position which the two surfaces are exposed to the outside.

However, the present invention is not limited thereto, but when the incident planes 3A and 4A of the image capture lens for a left eye 3 and the image capture lens for a right eye 4 can be simultaneously covered, the lens protection cover having other kinds of configurations such as a lens protection cover in which the incident planes 3A and 4A are directed in the same direction, and the incident planes 3A and 4A of the image capture lens for a left eye 3 and the image capture lens for a right eye 4 disposed in parallel in a transverse row are directed and movable in the same direction, and formed of one plate or sheet, or a lens protection cover having at least three or more parts, which can be separated, can be widely applied.

### [2-9 Variant 9]

Further, in the above-mentioned embodiment, the case in which the lens-side frame 21 described with reference to Figs. 1 to 14 is applied as a lens-side frame opposite to an interval between the two surfaces of the two image capture lenses and disposed in front of the two surfaces has been described,

However, the present invention is not limited thereto but the lens-side frame having other kinds of configurations such as an I-shaped lens-side frame disposed at a side in the same direction, to which the incident planes 3A and 4A of the image capture lens for a left eye 3 and the image capture lens for a right eye 4 are directed, and disposed at the interval between the image capture lens for a left eye 3 and the image capture lens for a right eye 4 can be widely applied.

### [2-10 Variant 10]

Further, in the above-mentioned embodiment, the case in which the front frame 30 described with reference to Figs. 1 to 14 is applied as the front frame having the pore configured to individually or simultaneously expose the two surfaces of the two image capture lenses and disposed in front of the lens protection cover in a state in which the pore is opposite to the two surfaces has been described.

However, the present invention is not limited thereto but the front frame having other kinds of configurations such as a plate-shaped front frame in which the two pores are drilled at the one surface to oppose the incident planes 3A and 4A of the image capture lens for a left eye 3 and the image capture lens for a right eye 4, and disposed in front of the lens protection cover at a side in the same direction to which the incident planes 3A and 4A of the image capture lens for a left eye 3 and the image capture lens for a right eye 4 are directed can be widely applied.

In the present invention, when the front frame in which the two pores are drilled is applied, in a state in which the image capture lens for a left eye 3 and the image capture lens for a right eye 4 are protected by the lens protection cover, the interval section between the two pores can be disposed in front of the lens protection cover to reduce an exposure portion of the cover front surface.

Accordingly, in the present invention, when the front frame in which the two pores are drilled is applied, a hand or the like can hardly come in contact with the cover front surface of the lens protection cover.

In addition, in the present invention, even when the cover front surface of the lens protection cover is pressed via the pores of the front frame, the warpage of the lens protection cover can be restricted by the one surface including the interval section between the two pores of the front frame and the cover protection convex section of the lens-side frame.

That is, in the present invention, in the case of the related configuration, in comparison with the above-mentioned embodiment, when the cover front surface of the lens protection cover is pressed, a portion configured to restrict the warpage of the lens protection cover is increased, and damage to the lens protection cover can hardly occur.

### [2-11 Variant 11]

Further, in the above-mentioned embodiment, the case in which the lens barrel for a left eye L1 and the lens barrel for a right eye L2 described with reference to Figs. 1 to 14 is applied as the two imaging optical systems having image capture lenses and disposed such that the surfaces of the image capture lenses are directed in the same direction and the image capture lenses are arranged in a transverse row has been described.

However, the present invention is not limited thereto but the two imaging optical systems having other kinds of configurations such as two imaging optical systems disposed via a partition and each having a plurality of optical devices such that the imaging lights coming from the outside do not interfere with each other can be widely applied.

### [2-12 Variant 12]

Further, in the above-mentioned embodiment, the case in which the lens protection cover 29 constituted by the upper cover half body 27 and the lower cover half body 28 described with reference to Figs. 1 to 14 is applied as the one lens protection cover disposed in front of the two surfaces of the two image capture lenses included in the two imaging optical systems and movable between the covering position configured to cover the two surfaces from the outside and the retreat position configured to expose the two surfaces to the outside has been described.

However, the present invention is not limited thereto but the lens protection cover having other kinds of configurations such as a lens protection cover formed of one plate or sheet in advance, or the lens protection cover formed of at least three or more separable parts, as long as the incident planes 3A and 4A of the image capture lens for a left eye 3 and the image capture lens for a right eye 4 can be simultaneously covered can be widely applied.

### [2-13 Variant 13]

Further, in the above-mentioned embodiment, the image sensor for a left eye 44 and the image sensor for a right eye 46 described with reference to Figs. 1 to 14 is applied as the two or fewer image sensors disposed in rear of the two imaging optical systems and configured to photoelectrically convert the imaging light coming from the outside via the two imaging optical systems has been described.

However, the present invention is not limited thereto but the image sensor having other kinds of configurations such as one image sensor on which the lens unit is detachably mounted, configured to photoelectrically convert the imaging light via the imaging optical system for a left eye and the imaging optical system for a right eye, and installed at the single lens type image capture device can be widely applied.

### [Industrial Applicability]

The present invention can be used for an image capture device such as a video camera or a still camera.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 1: Video camera
- 2: Camera housing
- 3: Image capture lens for left eye
- 3A, 4A: Incident plane
- 4: Image capture lens for right eye
- 5: Lens hood
- 5A: Body section
- 5B: Hood section
- 5C: Concave section for hood
- 5CX: Bottom opening
- 5CY: Tip opening
- 20: Lens protection unit
- 21: Lens-side frame
- 21F: Cover protection convex section
- 27, 65: Upper cover half body
- 27A, 65A: Upper cover main body
- 28, 66: Lower cover half body
- 28A, 66A: Low cover main body
- 29: Lens protection cover
- 30: Front frame
- 44: Image sensor for left eye
- 46: Image sensor for right eye
- LU: Lens unit
- L1: Lens barrel for left eye
- L2: Lens barrel for right eye

## Claims

1. A lens protection device comprising:
one lens protection cover configured to be disposed in front of two surfaces of two image capture lenses that have the two surfaces directed in a same direction and arranged in a transverse row and to be movable between a covering position for covering the two surfaces from an outside and a retreat position for exposing the two surfaces to the outside.

2. The lens protection device according to claim 1, comprising:
a lens-side frame configured to be opposite to an interval between the two surfaces of the two image capture lenses and to be disposed in front of the two surfaces,
wherein the lens protection cover is installed in front of the lens-side frame.

3. The lens protection device according to claim 2, comprising:
a front frame configured to have a pore for individually or simultaneously exposing the two surfaces of the two image capture lenses and to be disposed in front of the lens protection cover while the pore is opposite to the two surfaces.

4. The lens protection device according to claim 3, wherein the lens protection cover is disposed between the lens-side frame and the front frame to be installed to be movable between the covering position and the retreat position.

5. The lens protection device according to claim 4, wherein the lens protection cover is installed to be movable between the covering position and the retreat position on at least one of a side over and a side under the two surfaces of the two image capture lenses.

6. The lens protection device according to claim 5, wherein the lens protection cover is constituted by an upper cover half body movable between an upper covering position configured to cover upper halves of the two surfaces of the two image capture lenses and an upper retreat position disposed over the upper halves of the two surfaces, and a lower cover half body movable between a lower covering position configured to cover lower halves of the two surfaces of the two image capture lenses and a lower retreat position disposed under the lower halves of the two surfaces.

7. A lens unit comprising:
two imaging optical systems configured to include image capture lenses and to be disposed in a manner that surfaces of the image capture lenses are directed in a same direction and the image capture lenses are arranged in a transverse row; and
one lens protection cover configured to be disposed in front of the two surfaces of the two image capture lenses provided in the two imaging optical systems and to be installed to be movable between a covering position for covering the two surfaces from an outside and a retreat position for exposing the two surfaces to the outside.

8. An image capture device comprising:
two imaging optical systems configured to include image capture lenses and to be disposed in a manner that surfaces of the image capture lenses are directed in a same direction and the image capture lenses are arranged in a transverse row;
two or fewer image sensors configured to be disposed in rear of the two imaging optical systems and configured to photoelectrically convert imaging light coming from an outside via the two imaging optical systems; and
one lens protection cover configured to be disposed in front of the two surfaces of the two image capture lenses provided in the two imaging optical systems and to be installed to be movable between a covering position for covering the two surfaces from the outside and a retreat position for exposing the two surfaces to the outside.
